(19) **Europäisches Patentamt / European Patent Office / Office européen des brevets**

(11) **EP 2 644 731 B1**

(12) **EUROPEAN PATENT SPECIFICATION**

(45) Date of publication and mention
of the grant of the patent:
**30.11.2016 Bulletin 2016/48**

(51) Int Cl.:
*C22C 38/00* (2006.01)  *C21D 8/02* (2006.01)
*B23K 15/00* (2006.01)  *B23K 35/30* (2006.01)
*C22C 19/03* (2006.01)  *C22C 38/14* (2006.01)
*C22C 38/02* (2006.01)  *C22C 38/08* (2006.01)
*C22C 38/12* (2006.01)  *C22C 38/16* (2006.01)
*C22C 38/04* (2006.01)  *C22C 19/00* (2006.01)
*C22C 38/06* (2006.01)  *C21D 9/50* (2006.01)

(21) Application number: **11842661.8**

(22) Date of filing: **27.10.2011**

(86) International application number:
**PCT/JP2011/074863**

(87) International publication number:
**WO 2012/070360 (31.05.2012 Gazette 2012/22)**

(54) **ELECTRON-BEAM WELDED JOINT, STEEL MATERIAL FOR ELECTRON-BEAM WELDING, AND MANUFACTURING METHOD THEREFOR**

ELEKTRONENSTRAHL-SCHWEISSVERBINDUNG, STAHLMATERIAL ZUM ELEKTRONENSTRAHL-SCHWEISSEN UND HERSTELLUNGSVERFAHREN DAFÜR

JOINT SOUDÉ PAR FAISCEAU D'ÉLECTRONS, MATÉRIAU D'ACIER POUR SOUDAGE PAR FAISCEAU D'ÉLECTRONS ET LEUR PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2010 JP 2010260388**

(43) Date of publication of application:
**02.10.2013 Bulletin 2013/40**

(73) Proprietor: **Nippon Steel & Sumitomo Metal Corporation**
**Tokyo 100-8071 (JP)**

(72) Inventors:
• **HONMA Ryuichi**
**Tokyo 100-8071 (JP)**
• **UEMORI Ryuji**
**Tokyo 100-8071 (JP)**
• **ISHIKAWA Tadashi**
**Tokyo 100-8071 (JP)**
• **KOJIMA Akihiko**
**Tokyo 100-8071 (JP)**
• **HOSHINO Manabu**
**Tokyo 100-8071 (JP)**

(74) Representative: **Vossius & Partner
Patentanwälte Rechtsanwälte mbB
Siebertstrasse 3
81675 München (DE)**

(56) References cited:
EP-A1- 1 736 562    EP-A1- 1 777 315
EP-A1- 1 876 254    EP-A1- 1 995 339
EP-A1- 2 070 631    EP-A1- 2 236 631
WO-A1-2006/009299    WO-A1-2010/052927
WO-A1-2010/090349    JP-A- 1 015 321
JP-A- 6 122 942    JP-A- 2003 003 233
JP-A- 2003 201 535    JP-A- 2003 293 079
JP-A- 2004 011 008    JP-A- 2005 171 300
JP-A- 2006 241 551    JP-A- 2006 274 350
JP-A- 2009 091 653

## Description

Technical Field

The present invention relates to a steel for electron-beam welding, which is to be welded by emitting an electron-beam to a weld target portion, and a method of manufacturing the steel for electron-beam welding, and further relates to an electron-beam welded joint formed by emitting an electron-beam to a weld target portion of the steel.

Background Art

In recent years, problems have arisen of reducing $CO_2$ gas, which is said to be a cause of global warming, or the future exhaustion of oil or other fossil fuels. To address these problems, recyclable natural energy has been actively used. Wind power is one form of promising recyclable natural energies, and large-scale wind power generators have been increasingly constructed.

The most suitable area for wind power generators to be constructed is an area where strong wind is expected to blow constantly, and off-shore wind power generators are under planning or actually in operation all over the world (see Patent Documents 1 to 4).

In order to build a tower for wind power generation at sea, it is necessary to drive the foundation portion of the tower into the seabed. Further, in order to obtain sufficient height of turbine blades of the wind power generator from the sea level, the foundation portion of the tower is required to have sufficient length.

Thus, the foundation portion of the tower of the wind power generator employs a steel pipe structure having a wall thickness exceeding 50 mm, for example, of approximately 100 mm, and a large diameter in cross-section of approximately 4 m. Further, the total height of the tower is as high as 80 m or more. In recent years, a large steel-structure such as a tower for wind power generation has been required to be welded and built through electron-beam welding on the coast near the construction site in an easy and efficient manner.

In other words, under the circumstances described above, there arises a new technical demand for welding an ultra-thick steel plate having a thickness of 100 mm on-site in a highly efficient manner.

In general, a high-energy-density beam welding such as electron-beam welding and laser beam welding exhibits high efficiency. However, the thickness of the steel plate to be welded with laser beam has been limited. Further, the conventional electron-beam welding is required to be performed in a vacuum chamber under a high vacuum state. Thus, the thickness or size of the steel plate that can be welded through the high-energy-density beam welding largely depends on the capacity of welding equipment or inner size of the vacuum chamber.

In recent years, to address the circumstances described above, an electron-beam welding method has been proposed that employs reduced pressure in the vicinity of a portion to be welded, thereby efficiently welding an ultra-thick steel plate with a thickness of approximately 100 mm on-site. For example, the Welding Institute of the United Kingdom has developed a welding method (reduced pressured electron-beam welding: RPEBW) enabling working under a low vacuum state (see Patent Document 5).

With the reduced pressured electron-beam welding (RPEBW), it is possible to efficiently perform welding, by locally reducing the pressure of the portion to be welded to be a vacuum state in the case where a large-scale steel structure such as the tower of a wind power generator is constructed. The RPEBW method is performed in a state in which the degree of vacuum is low as compared with the method of performing welding in the vacuum chamber. However, the ductility of a welded metal (WM) can be expected to be improved as compared with the conventional arc welding.

In general, a fracture toughness value $\delta c$ based on fracture mechanics is known as an index for quantitatively evaluating the safety of a welded structure. The $\delta c$ can be obtained through a crack tip opening displacement (CTOD) test. The fracture toughness is affected by a size of a test piece. Thus, although favorable results can be obtained through a small-sized test such as the conventional V-notch Charpy impact test, it is not always true that the favorable fracture toughness value $\delta c$, which is 0.5 mm or more at 0°C, can be obtained through the CTOD test with a welded joint in the large-scale steel structure.

The electron-beam welding method is a method employing energy of the electron-beam to once melt and solidify the base metal of a weld target portion to weld. Normally, the compositions of the weld target portion in the electron-beam welding method are almost the same as those of the base metal (steel). On the other hand, in large-heat input arc welding such as electro gas welding, mechanical properties such as hardness of the welded metal and the fracture toughness value $\delta c$ are adjusted by using, for example, welding wire. The welding wire is not generally used in the electron-beam welding method.

In view of the above-described circumstances, a method of optimizing the hardness or cleanliness of the welded metal (WM) has been proposed to improve the fracture toughness value $\delta c$ of the electron-beam welded joint (see, for example, Patent Documents 6 and 7). Patent Document 6 proposes setting the hardness of the welded metal to be more than 110% and not more than 220% of that of the base metal, and the width of the welded metal to be 20% or less of the thickness of the steel. Further, Patent Document 7 proposes setting the amount of O in the welded metal to 20 ppm or more, and the number of oxides having a diameter of 2.0 $\mu$m or more to 10 pieces/mm$^2$ or less.

Related Art Documents

Patent Documents

Patent Document I: Japanese Unexamined Patent Application, First Publication No. 2008-111406
Patent Document 2: Japanese Unexamined Patent Application, First Publication No. 2007-092406
Patent Document 3: Japanese Unexamined Patent Application, First Publication No. 2006-322400
Patent Document 4: Japanese Unexamined Patent Application, First Publication No. 2006-037397
Patent Document 5: PCT International Publication No. WO 99/16101
Patent Document 6: Japanese Unexamined Patent Application, First Publication No. 2001-21532
Patent Document 7: Japanese Unexamined Patent Application, First Publication No. 2008-88504

EP 2 236 631 A1 discloses a process for producing thick high-strength steel plate excellent in brittle fracture arrestability and thoughness of zone affected by heat in large-heat-input welding.

JP2004-011008 A discloses a steel member and a structure which have strength satisfying API (American Pipe Institute) standards 5L-X65 or higher, and in which critical CTOD (Crack Tip Opening Displacement) at -10°C is $\geq$ 0.20 mm in both of a weld metal and a weld line in the weld zone with electron beam welding or laser welding applied.

WO 2010/052927 A1 discloses a method for manufacturing steel plate and steel pipe for ultrahigh-strength line pipe.

EP 1 736 562 A1 discloses a thick high strength steel plate having excellent low temperature toughness in welding heat affected zone caused by high heat input welding.

WO 2010/090349 A1 discloses a high-strength steel tube for low-temperature use with superior buckling resistance and toughness in weld heat-affected areas, and a manufacturing method for same.

EP 1 876 254 A1 discloses a thick seamless steel pipe for line pipe and method for production thereof.

JP 2006 241551 A discloses a thick steel plate having excellent weldability and low temperature toughness in which the increase of strength and functionality and the reduction of cost can be attained by increasing the amount of Mn to be added and reducing the amounts of Ni and Cu to be added.

JP 2005 171300 A discloses a high tensile steel in which impact value at -56°C is $\geq$80 J in a HAZ (heat affected zone) and is $\geq$50 J in a weld metal zone even if high heat input submerge arc welding of $\geq$150 kJ/cm is performed.

JP 2009 091653 A discloses a high strength welded steel pipe for low temperature use having excellent weld heat affected zone toughness which has a pipe thickness of $\leq$50 mm and a tensile strength of 570 to 760 MPa, and is suitable for transport use to natural gas and crude oil.

Disclosure of Invention

Problems to be Solved by Invention

When the tower of a wind power generator at sea is constructed, steel is butted to each other to weld, and the welded steel is used without applying any thermal treatment to the welded portion. Thus, a welded metal (WM) and a weld heat-affected zone (HAZ: heat-affected zone, hereinafter, referred to simply as heat-affected zone) are required to have excellent toughness. In the case of the electron-beam welding, since the welding wire is not used in general, the toughnesses of the welded metal and the heat-affected zone are controlled by adjusting the composition of the steel (base metal).

Conventionally, a method is proposed of controlling inclusions in the welded metal, a relationship between the hardness of the welded metal and the hardness of the base metal, or the width of the welded metal. However, in the case where the toughness of the heat-affected zone is not sufficient, the fracture toughness value of the welded joint as a whole reduces.

It should be noted that, by attaching a plate-like or foil-like Ni (insert metal) to a surface to be welded (groove face), and applying electron-beam welding, it is possible to enhance the toughness of the welded metal (WM) so as to be higher than that of the steel (base metal). However, in this case, the difference in hardness between the welded metal and the heat-affected zone significantly increases if the compositions of the steel (base metal) are not appropriate. This leads to a significant reduction in the fracture toughness value $\delta$c of the heat-affected zone where the difference in hardness is significantly large.

According to the study made by the present inventors, the appropriate compositions for improving the ductility are not always the same between the welded metal and the heat-affected zone in the electron-beam welded joint. Thus, the high ductility cannot be obtained at the welded metal even if the electron-beam welding is applied to the conventional high-HAZ-toughness steel for arc welding. Further, the high ductility cannot be obtained at the heat-affected zone even if the compositions of the steel for arc welding are optimized by taking the ductility of the welded metal formed by the electron-beam welding into consideration.

In other words, the electron-beam welding and the arc welding are fundamentally different in the welding method and the formed joint structure. Thus, the problem of the electron-beam welding cannot be solved by using the manner for solving the problem of the arc welding.

The present invention has been made in view of the circumstances described above, and an object of the present invention is to provide a steel for electron-beam welding having a thickness of 45 mm or more and constituting a foundation portion of a tower of a wind power generator at sea, which can be used for forming an electron-beam welded joint exhibiting increased strength and appropriate balance of the fracture toughnesses between the welded metal (WM), the heat-affected zone (HAZ) and the base metal (BM), and a method of manufacturing the steel for electron-beam welding. Another object of the present invention is to provide an electron-beam welded joint which is formed by emitting an electron-beam to a weld target portion of the steel and is superior in the fracture toughness.

Solution to Problems

According to the present invention, Mn of 1.5 mass% or more is added to secure hardenability, Al which is strong deoxidation element is added, and Ti nitrides are precipitated and dispersed in the steel. Ti nitrides are used as pinning particles for suppressing grain growth or nuclei for intra-granular transformation, which makes fracture toughnesses of steel (BM), heat-affected zone (HAZ), and welded metal (WM) appropriately balanced.

In particular, with the electron-beam welding, in which the WM width and the HAZ width are narrow and the amount of heat inputted is low, fine Ti nitrides suppress coarsening of the austenite grain in the heat-affected zone (HAZ) and contribute to improving the fracture toughness at the welded portion.

Further, according to the present invention, by controlling newly introduced index CeEB of hardenability for electron-beam welding, the fracture toughnesses of the steel (BM), the welded metal (WM), and the heat-affected zone (HAZ) are appropriately balanced to secure a desired fracture toughness at the welded portion as a whole. Yet further, according to the present invention, the amount of Mn is increased in order to enhance the hardenability, and the amounts of Cr, Mo, Cu, Ni, and/or Nb are decreased in order to reduce the manufacturing cost of the steel for electron-beam welding.

The index CeEB of hardenability for electron-beam welding is index newly introduced by the present inventors to improve the fracture toughness of the electron-beam welded joint. The technical meaning of the index CeEB will be described later along with the technical meaning of an index (ratio) "C/CeEB" (C: the amount of C), which is also introduced.

An aspect of the present invention employs the following.

(1) An electron-beam welded joint, which is manufactured by applying an electron-beam welding to a steel plate, according to an aspect of the invention, the steel plate consisting of as a composition by mass%, C: 0.02% to 0.1%, Si: 0.03% to 0.30%, Mn: 1.5% to 2.5%, Ti: 0.005 to 0.015%, N: 0.0020 to 0.0060%, Al: more than 0.004% to 0.05%, Nb: 0% to 0.020%, V: 0% to 0.030%, Cr: 0% to 0.50%, Mo: 0% to 0.50%, Cu: 0% to 0.25%, Ni: 0% to 0.50%, B: 0% to 0.0030%, Ca: 0% to 0.0050%, P: limited to 0.015% or less, S: limited to 0.010% or less, O: limited to 0.0035% or less, Mg: limited to 0.0002% or less and a balance consisting of iron and unavoidable impurities, wherein an index value CeEB obtained by substituting the composition of the steel plate into a following Formula 1 is 0.49% to 0.60%, a C/CeEB, which is a ratio of an amount in mass% of C in the steel plate relative to the index value CeEB of the steel plate is 0.04 to 0.18, a number of inclusion particles having an equivalent circle diameter of 1.0 $\mu$m or more measured using FE-SEM is 20 pieces/mm$^2$ or less at a thickness center portion in a cross-section along a thickness direction of the steel plate, and a number of Ti containing nitride particles containing Ti of 10% or more and having an equivalent circle diameter of 0.05 $\mu$m or more and less than 0.5 $\mu$m is $1 \times 10^3$ pieces/mm$^2$ or more and less than $5 \times 10^4$ pieces/mm$^2$ at the thickness center portion, the number of the nitride particles containing Ti of 10% or more and having an equivalent circle diameter of 0,05 $\mu$m or more and less than 0,5 $\mu$m being measured using FE-TEM at a magnification of 10000 - fold to 1000000 - fold, the index value of hardenability for electron-beam welding,

The index value of hardenability for electron-beam welding, $CeEB = C + (9/40)Mn + (1/15)Cu + (1/15)Ni + (1/5)Cr + (1/5)Mo + (1/5)V$ ... (Formula 1)

where C, Mn, Cu, Ni, Cr, Mo, and V represent amounts in mass% of each element contained in the composition of the steel plate.

(2) The electron-beam welded joint according to (1), wherein the steel plate has a thickness of 45 to 150 mm.

(3) The electron-beam welded joint according to any of (1) to (2), wherein when a crack tip opening displacement test CTOD value of a welded metal measured by the CTOD test at the test temperature of 0°C is defined as $\delta_{WM}$, a CTOD value of a weld heat-affected zone measured by the CTOD test at the test temperature of 0°C is defined as $\delta_{HAZ}$, and a CTOD value of the steel measured by the CTOD test at the test temperature of 0°C is defined as $\delta_{BM}$, the $\delta_{WM}$, the $\delta_{HAZ}$, and the $\delta_{BM}$ satisfy $0.15 \leq \delta_{WM} / \delta_{BM} \leq 1.1$ and $0.15 \leq \delta_{HAZ} / \delta_{BM} \leq 1.1$.

(4) A steel plate for electron-beam welded joint according to another aspect of the invention, the steel plate consisting of as a composition by mass%, C: 0.02% to 0.1%, Si: 0.03% to 0.30%, Mn: 1.5% to 2.5%, Ti: 0.005 to 0.015%, N: 0.0020 to 0.0060%, Al: more than 0.004% to 0.05%, Nb: 0% to 0.020%, V: 0% to 0.030%, Cr: 0% to 0.50%, Mo: 0% to 0.50%, Cu: 0% to 0.25%, Ni: 0% to 0.50%, B: 0% to 0.0030%, Ca: 0% to 0.0050%, P: limited to 0.015% or less, S: limited to 0.010% or less, O: limited to 0.0035% or less, Mg: limited to 0.0002% or less and a balance consisting of iron and unavoidable impurities, wherein an index value CeEB obtained by substituting the composition of the steel into a following Formula 1 is 0.49% to 0.60%, a C/CeEB, which is a ratio of an amount in mass% of C in the steel plate relative to the index value CeEB of the steel plate is 0.04 to 0.18, a number of inclusion particles having an equivalent circle diameter of 1.0 $\mu$m or more measured using FE-SEM is 20 pieces/mm$^2$ or less at a thickness center portion in a cross-section along a thickness direction of the steel plate, and a number of Ti containing nitride particles containing Ti of 10% or more and having an equivalent circle diameter of 0.05 $\mu$m or more and less than 0.5 $\mu$m is $1 \times 10^3$ pieces/mm$^2$ or more and less than $5 \times 10^4$ pieces/mm$^2$ at the thickness center portion, a C/CeEB, which is a ratio of an amount in mass% of C in the steel plate relative to the index value CeEB of the steel plate is 0.04 to 0.18,
the index value of hardenability for electron-beam welding,

$$\text{The index value of hardenability} \quad \text{for electron-beam welding, CeEB} = C + (9/40)\text{Mn} + (1/15)\text{Cu} + (1/15)\text{Ni} + (1/5)\text{Cr} + (1/5)\text{Mo} + (1/5)\text{V} \dots \text{(Formula 1)}$$

where C, Mn, Cu, Ni, Cr, Mo, and V represent amounts in mass% of each element contained in the composition of the steel.

(5) the steel for the electron-beam welded joint according to (4) wherein the steel has a thickness of 45 to 150 mm.

(6) A method according to another aspect of the present invention, which is to manufacture the steel for the electron-beam welded joint according to (4) or (5), the method comprising a casting process of casting and cooling the steel so that a cooling rate in a temperature range of 1300°C to 1100°C is 9 to 30°C/min, a process of heating the steel to a temperature range of 950°C to 1150°C after the casting process, and thereafter, a process of thermomechanical-treating the steel.

In order to obtain a predetermined CTOD value (fracture toughness value) in the electron-beam welded joint, it is important to appropriately balance the fracture toughness values of the steel (BM), the welded metal (WM), and the heat-affected zone (HAZ).

In other words, even if the fracture toughness of the steel (base metal) and the fracture toughness of the heat-affected zone are excellent, the welded metal acts as the starting point of fracture and the fracture toughness as the welded joint deteriorates when the fracture toughness of the welded metal is insufficient. Further, even if the fracture toughness of the welded metal is excellent, the heat-affected zone acts as the starting point and the fracture propagates when the fracture toughness of the heat-affected zone is insufficient. As described above, when the fracture toughness is uneven at portions of the welded joint, the fracture toughness of the welded joint as a whole deteriorates.

In the welded portion (the welded metal and the heat-affected zone) of the steel which has a yield strength of 355 MPa grade and to which the electron-beam welding is applied, since coarse ferrite at grain boundary formed in the vicinity of prior austenite grain, upper bainite width lath shape formed in the prior austenite grain, ferrite side plate, and the like act as the starting point of fracture, brittle fracture occurs.

A unit of fracture surface at the time when the brittle fracture occurs from the upper bainite and the coarse ferrite formed from the grain boundary of the prior austenite as the starting point is dependent upon the grain diameter of the prior austenite. Thus, the fracture toughness of the welded portion can be improved by reducing the grain diameter of the prior austenite in the welded metal and the heat-affected zone by using the pinning effect of precipitates or intragranular transformation.

On the basis of the facts described above, according to the present invention, an appropriate amounts of Al and Ti are added to steel so as to form an appropriate amount of fine Ti nitrides (Ti nitrides are mainly TiN but includes composites with oxides or sulfides and the like) having an appropriate size in not only the steel (base metal) but also the welded metal (WM). With the electron-beam welding employing the low amount of heat inputted, the fine Ti nitrides remains in the heat-affected zone (HAZ) to function as the pinning particles that suppress the grain growth. Thus, the grain growth in the heat-affected zone is suppressed, whereby the fracture toughness improves.

Further, the fine Ti nitrides act as nuclei for intra-granular transformation to form intra-granular ferrite in the welded metal and the heat-affected zone. As a result, the structure of the welded metal and the heat-affected zone is refined, and the fracture toughnesses of the steel (base metal), the heat-affected zone, and the welded metal improve while the balance between these three fracture toughnesses improves.

Advantageous Effects of Invention

According to the present invention, it is possible to suppress the deterioration in the fracture toughnesses of a welded metal and a heat-affected zone of an electron-beam welded joint of a steel with a yield strength of 355 MPa grade. Further, it is possible to provide an electron-beam welded joint in which the fracture toughnesses of the steel (base metal), the heat-affected zone and the welded metal are appropriately balanced, and to provide the steel used for forming the welded joint at a low cost.

Brief Description of the Drawings

FIG 1 is a diagram qualitatively illustrating a relationship between strength, toughness and a microstructure of a steel.

FIG 2A is a diagram qualitatively illustrating a relationship between hardenability and grain diameter of a welded metal.

FIG. 2B is a diagram qualitatively illustrating a relationship between hardenability and the amount of high-carbon martensite in a heat-affected zone.

FIG 3 is a diagram qualitatively illustrating a relationship between a ratio of hardness of the welded metal relative to hardness of the steel (base metal), and the fracture toughrlesses of the welded metal and the heat-affected zone.

FIG 4 is a diagram qualitatively illustrating a relationship between CeEB and a fracture toughness value ($\delta c$) of the welded metal and the heat-affected zone.

FIG 5A is a diagram qualitatively illustrating a relationship between the fracture toughness value of the welded metal and C/CeEB.

FIG. 5B is a diagram qualitatively illustrating a relationship between the fracture toughness value of the heat-affected zone and C/CeEB.

FIG. 6 is a diagram illustrating a test piece having a notch.

FIG. 7 is a diagram illustrating a relationship between results of a CTOD test applied to the welded joint and the number of inclusions (fine Ti nitrides and coarse inclusion particles) contained in the steel.

FIG 8A is a diagram illustrating a correlation between the cooling rate of a slab and the number of fine Ti nitrides contained in the steel.

FIG 8B is a diagram illustrating a correlation between the cooling rate of a slab and the number of coarse inclusion particles contained in the steel.

Description of Embodiments

When the tower of a wind power generator is constructed at sea, the steel after being welded is used as it is without applying any thermal treatment to the joint portion. Thus, the welded metal and the heat-affected zone are required to have excellent toughness. In the case of the electron-beam welding, since the welding wire is not used in general, the toughnesses of the welded metal and the heat-affected zone are controlled by adjusting the composition of the steel (base metal).

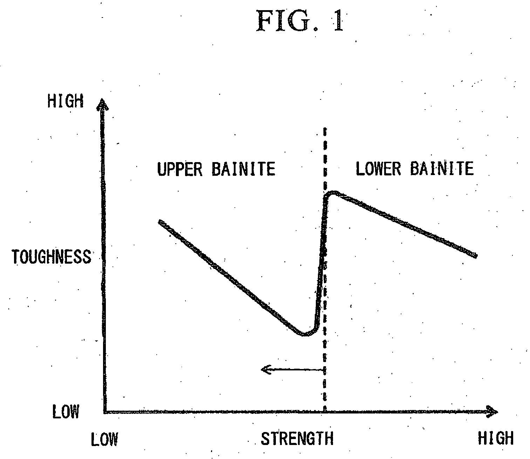

Conventionally, the electron-beam welding has been used, for example, for a high-strength steel containing a large amount of Cr or Mo (so-called Cr-Mo high-strength steel), a stainless steel, or high-Ni steel, to which formation of oxides of the welded metal is not required. In the case of the stainless steel, brittle phase is not formed in the heat-affected zone. Further, in the case of Cr-Mo high-strength steel, the structure of the heat-affected zone is made of lower bainite having excellent toughness as qualitatively illustrated in FIG 1, and an extremely high toughness can be obtained by controlling the oxides of the welded metal.

The thickness and the strength of the steel used for the electron-beam welded joint according to the embodiment of the present invention are not particularly limited. However, it is preferable to use, for example, a steel for a structure used, for example, for the tower of a wind power generator at sea and having a thickness in the range of 45 mm to 150 mm, YP (yield point) in the range of approximately 315 MPa to 550 MPa, and TS (tensile strength) in the range of approximately 450 MPa to 690 MPa. Depending on application, the upper limit of the thickness may be set to 120 mm or 130 mm. The lower limit of YP may be set to 340 MPa or 355 MPa, and the upper limit of YP may be set to 500 MPa, 460 MPa, or 420 MPa. The lower limit of TS may be set to 470 MPa or 490 MPa, and the upper limit of TS may be set to 600 MPa, 570 MPa, or 550 MPa.

This type of steel is a steel for a structure having aYP of approximately 355 MPa, and has a strength lower than that of the Cr-Mo high-strength steel. Further, the structure of the heat-affected zone is an upper bainite having reduced toughness as qualitatively illustrated in FIG 1. When this steel is subjected to the electron-beam welding, a coarsened structure such as ferrite at grain boundary or upper part bainite develops particularly in the heat-affected zone, and the high-carbon martensite (also referred to as island martensite or M-A constituent) is likely to be formed. Thus, in the case where the electron-beam welding is applied to the steel for a structure, it is not easy to secure the toughness of the heat-affected zone.

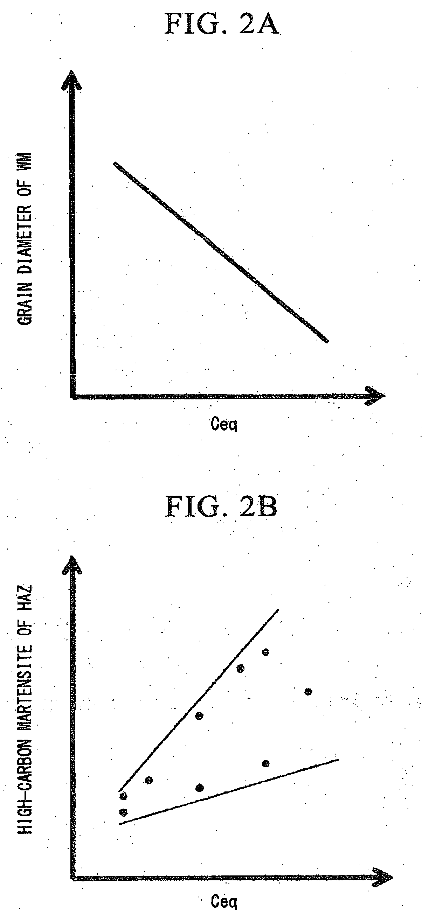

As for the relationship between the structure and the toughness, it is known that a reduction in the grain diameter is particularly effective in improving the toughness of the welded metal, and the high-carbon martensite reduces the toughness particularly of the heat-affected zone. Further, as for the relationship between the composition and the structure, it is known that, by increasing the hardenability index Ceq, the grain diameter of the welded metal reduces as illustrated in FIG. 2A, and the high-carbon martensite of the heat-affected zone increases as illustrated in FIG. 2B.

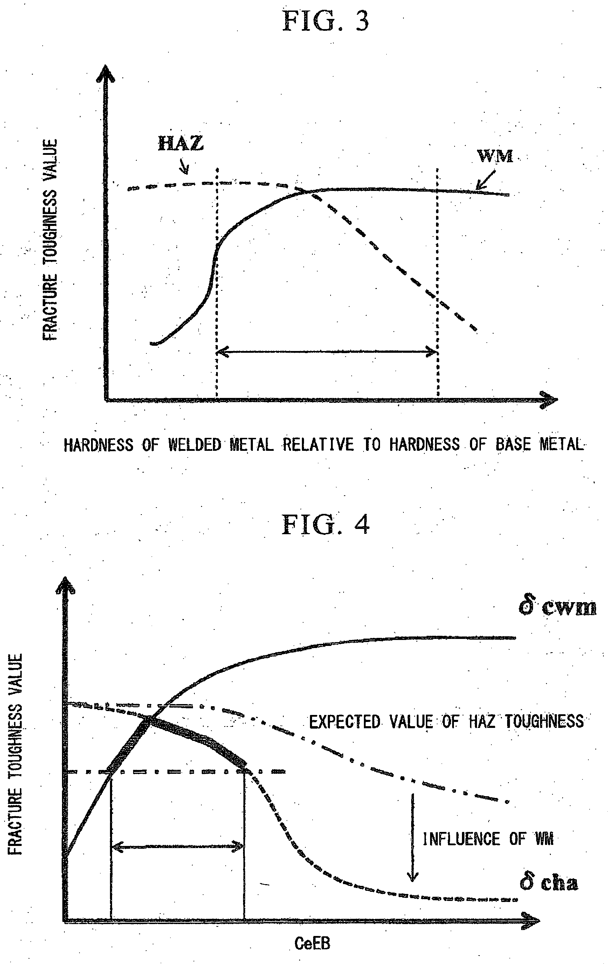

Further, in order to enhance the toughness of the welded metal and the heat-affected zone, the balance between the hardness of the welded metal and the hardness of the steel (base metal) is important. In other words, as illustrated in FIG 3, the toughness of the welded metal improves with the increase in the hardness of the welded metal relative to the hardness of the steel (base metal). However, a deformation concentrates on the heat-affected zone due to the effect of the increase in the hardness of the welded metal, which results in a decrease in the toughness of the heat-affected zone due to the effect of the increase in the hardness of the welded metal. For these reasons, if the hardenability is increased to prevent formation of the upper bainite having less toughness, the welded metal hardens, which causes a problem of deterioration in the toughness of the heat-affected zone.

As described above, the relationship between the hardenability of the steel and the grain diameter of the WM or high-carbon martensite of the HAZ, and the relationship between the ratio of the hardness of the WM relative to the hardness of the steel (base metal) and the toughness of the welded joint are qualitatively known. However, conventionally, the idea of controlling the balance of the fracture toughness of the welded joint using the composition of the steel has not been conceived. Thus, for example, in the case where the electron-beam welding is applied to the steel (base metal) having enhanced hardenability, a problem of significantly deteriorating the toughness of the HAZ occurs although the toughness of the WM improves.

In view of the facts described above, the present inventors made a study of an index indicating the hardenability suitable for the electron-beam welding in order to obtain a desired toughness in the electron-beam welded joint, and found and newly introduced "CeEB".

More specifically, the "index value of hardenability for electron-beam welding, CeEB" given by the following Formula 1 is an index which is obtained by focusing the hardenability that largely affects the formation of the structure of the steel and by considering the formation of a desired structure reliably in order to further enhance the fracture toughness of the electron-beam welded joint.

$$CeEB = C + (9/40)Mn + (1/15)Cu + (1/15)Ni + (1/5)Cr + (1/5)Mo + (1/5)V \ ... \ (Formula \ 1)$$

where C, Mn, Cu, Ni, Cr, Mo, and V represent amounts (mass%) of each element contained in the composition of the steel.

CeEB defined by the Formula 1 is an index which is obtained on the basis of the known carbon equivalent Ceq (= C + (1/6)Mn + (1/15)Cu + (1/15)Ni + (1/5)Cr + (1/5)Mo + (1/5)V) and in consideration that the hardenability decreases with a decrease in the amount of Mn due to evaporation at the time of electron-beam welding. It should be noted that a coefficient relating to Mn is set to 9/40 on the basis of the degree of the decrease in the hardenability, which is experimentally obtained. The value of the coefficient is larger than that in the known Ceq, which is 1/6.

The index value CeEB is an index for: (1) obtaining a desired range of the hardenability in the steel (base metal) before electron-beam welding; (2) facilitating formation of fine ferrite in the welded metal; and (3) suppressing formation of the upper bainite or high-carbon martensite that reduce the toughness in the heat-affected zone.

FIG. 4 qualitatively illustrates the relationship between the fracture toughness values ($\delta c$) of the welded metal (WM) and the heat-affected zone (HAZ) in the electron-beam welded joint, and CeEB. The solid line curve represents the fracture toughness value ($\delta cwm$) of the welded metal, and the broken line curve represents the fracture toughness value ($\delta cha$) of the heat-affected zone. The curve illustrated in the long dashed double-short dashed line represents the fracture toughness value of the heat-affected zone (expected values of HAZ toughness) on the assumption that the effect of the hardness of the WM is ignored. The expected values of the HAZ toughness can be measured, for example, through a fracture toughness test using a test piece subjected to a thermal treatment simulating a thermal history of the HAZ.

With the increase in the index value CeEB, the δcwm increases due to the refinement of the structure in the WM. Contrary, the expected value of the HAZ toughness decreases due to the increase in the high-carbon martensite in the HAZ and the hardening of the HAZ. Further, with the increase in the CeEB, the WM hardens, which results in a reduction in the δcha to be lower than the expected value of the HAZ toughness.

As described above, with the index value CeEB, it is possible to systematically evaluate the fracture toughnesses of the welded metal and the heat-affected zone. By setting the index value CeEB in an appropriate range, it is possible to make both the fracture toughness values of the welded metal and the heat-affected zone more than or equal to the target value plotted with the dot-and-dash line. In the case where the pinning particles described later are employed, the δcwm and the δcha improve due to the effect of the pinning or intra-granular transformation.

Next, the present inventors made a study of a relationship between the amount of C and the index value CeEB in the steel (base metal), and the toughnesses of the steel (base metal), the welded metal, and the heat-affected zone. As a result, it was found that "C/CeEB" which is a ratio of the amount of C relative to CeEB of the steel (base metal) should be controlled to a predetermined range. The technical meaning of the ratio "C/CeEB" will be described below.

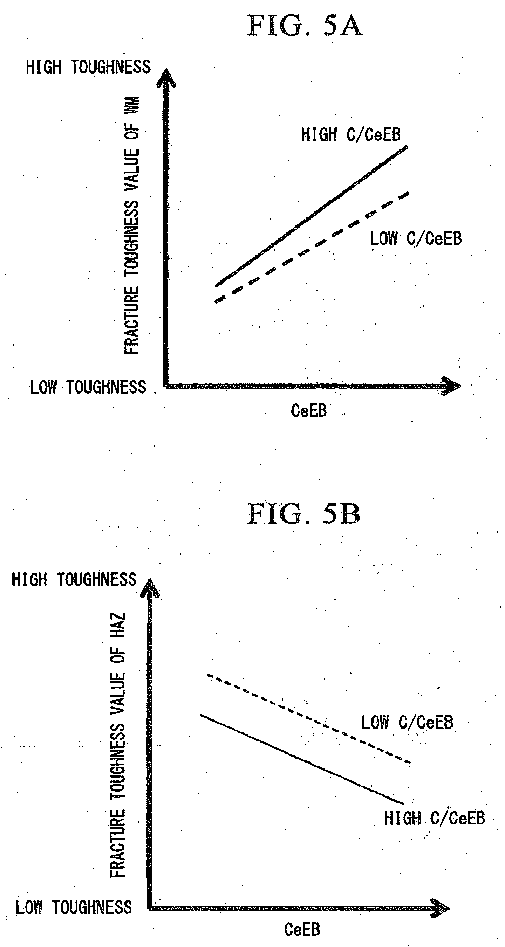

The ratio "C/CeEB" is an index used for preventing the hardenability of the welded metal and the hardenability of the heat-affected zone and the steel from being undesirably unbalanced. FIG. 5A illustrates a relationship between CeEB and the fracture toughness value of the welded metal. FIG 5B illustrates a relationship between CeEB and the fracture toughness value of the heat-affected zone.

CeEB is an index relating to the hardenability. Thus, with the increase in CeEB, the fracture toughness value of the welded metal increases due to the refinement of the grain diameter, and the fracture toughness value of the heat-affected zone decreases due to the promotion of the formation of the high-carbon martensite. Moreover, during the electron-beam welding, some of Mn included in the welded metal evaporates, and the amount of Mn decreases.

Thus, as shown in FIG 5A, in order to improve the fracture toughness of the welded metal, the hardenability can be ensured by increasing the C/CeEB. On the other hand, in the heat-affected zone, the formation of the high-carbon martensite is promoted with the increase in the amount of C. Thus, as shown in FIG 5B, in order to secure the fracture toughness value, the C/CeEB, should be limited.

The present inventors further made a study of a method of improving the balance between the fracture toughness value of the welded metal and the fracture toughness value of the heat-affected zone. As a result, it was found that it was possible to improve the toughness of the heat-affected zone and the welded metal in the case where Ti nitrides act as the pinning particle and the grain growth in the heat-affected zone is suppressed. Moreover, it was found that it was possible to improve the toughness of the heat-affected zone and the welded metal by forming intra-granular ferrite using the Ti nitrides which act as nuclei for intra-granular transformation.

Furthermore, the present inventors carried out preliminary tests in order to verify the influence of the size or number of inclusion particles in steel such as Ti nitrides or oxides on the fracture toughness value of the electron-beam-welded joint. As described below in detail, in the preliminary tests, plural steels having the inclusion particles of different numbers or sizes were produced by changing the total amount of oxygen in the steel or the cooling rate of slabs. Electron-beam welded joints were manufactured using the above steel, and the fracture toughness values were investigated.

In the preliminary tests, the inclusion particles, such as the nitrides and the oxides, and the fracture toughness value were measured in thickness center portion along thickness direction of steel plate. The reasons are as follows. The first reason is that, at the thickness center portion, restraint intensity is mechanically highest and the fracture may be initiated, as confirmed in CTOD test in the electron-beam-welded joint. Moreover, in the thickness center portion of the steel plate, solute elements are concentrated and the structure is likely to be hardened due to solidification segregation (center segregation) during continuous casting. Thus, the second reason is that, at the thickness center portion, brittle fracture may easily occur metallurgically as compared to a portion near surface layer along the thickness direction. Furthermore, in the electron-beam-welded joint which is the target of the invention and which is different from a general arc-welded joint, fused face is planar and roughly parallel with the thickness direction, so that coarse inclusion particles act as the starting point of the brittle fracture due to the above mentioned mechanical and metallurgical influence in the thickness direction. Thus, the third reason is that the fracture toughness values of the heat-affected zone and the welded metal of the electron-beam-welded joint may be influenced significantly by the size or number of the inclusion particles which exist in the thickness center portion as compared to the general arc-welded joint.

As a result of investigating the relationship between the number of the inclusion particles and the fracture toughness value through the preliminary tests described below, the following findings are obtained. In the case where the inclusion particles are nitrides containing Ti of 10% or more (hereinafter, referred to simply as Ti nitrides) and an equivalent circle diameter thereof is 0.05 μm or more, the pinning effect is obtained with high efficiency and the intra-granular transformation is promoted, which contributes significantly to the grain refinement. On the other hand, inclusion particles having a relatively large grain diameter act as the starting point of the brittle fracture regardless of the amount of Ti. Since the inclusion particles tend to act as the starting point of the brittle fracture when the equivalent circle diameter of the inclusion particles is more than 0.5 $\mu$m and tend notably to act as the starting point of fracture in particular when the equivalent circle diameter is 1.0 $\mu$m or more, it is preferable that the number thereof is limited as low as possible. In addition, it was found that the grain refinement could be effectively achieved without causing the brittle fracture when an appropriate amount of the Ti nitrides having an equivalent circle diameter of 0.05 $\mu$m or more and less than 0.5 $\mu$m was contained in the steel.

In the preliminary tests, among particles in the steel, the numbers were measured for two classes of (1) nitrides containing Ti of 10% or more and having the equivalent circle diameter of 0.05 $\mu$m or more and less than 0.5 $\mu$m (hereinafter, also referred to simply as "fine Ti nitrides") and (2) all of non-metallic inclusion particles having the equivalent circle diameter of 1.0 $\mu$m or more such as the nitrides and the oxides (hereinafter, also referred to simply as "coarse inclusion particles"). The relationship between the numbers of particles of the respective classes in the steel and the toughness value of the joint after electron-beam welding using the steel was quantitatively confirmed.

In the preliminary tests, slabs which intend to include, by mass%, C: 0.07%, Si: 0.06%, Mn: 2.0%, P: 0.007%, S: 0.002%, Ti: 0.01%, Al: 0.04%, and N: 0.005% were manufactured using a laboratory-scale furnace. When manufacturing the slabs, the following two processes were controlled in order to control the numbers of inclusions of the respective classes. (i) The total amount of oxygen of the slab was adjusted by changing a treatment time of vacuum degassing of molten steel. (ii) During casting, the cooling rate of the slab in a temperature range of 1300°C to 1100°C was controlled to a range of 1 °C/min to 30 °C/min by adjusting a cooling water flow for cooling the slab. The compositions of the respective slabs manufactured in the preliminary tests approximately coincided with the target value of the above composition. In addition, the total amounts of oxygen of the respective manufactured slabs were 11 ppm to 31 ppm. Steel plates having a plate thickness of 50 mm were manufactured through ACC described below using the obtained slabs.

The number of particles in the steel described above was measured through the method used in Examples described later.

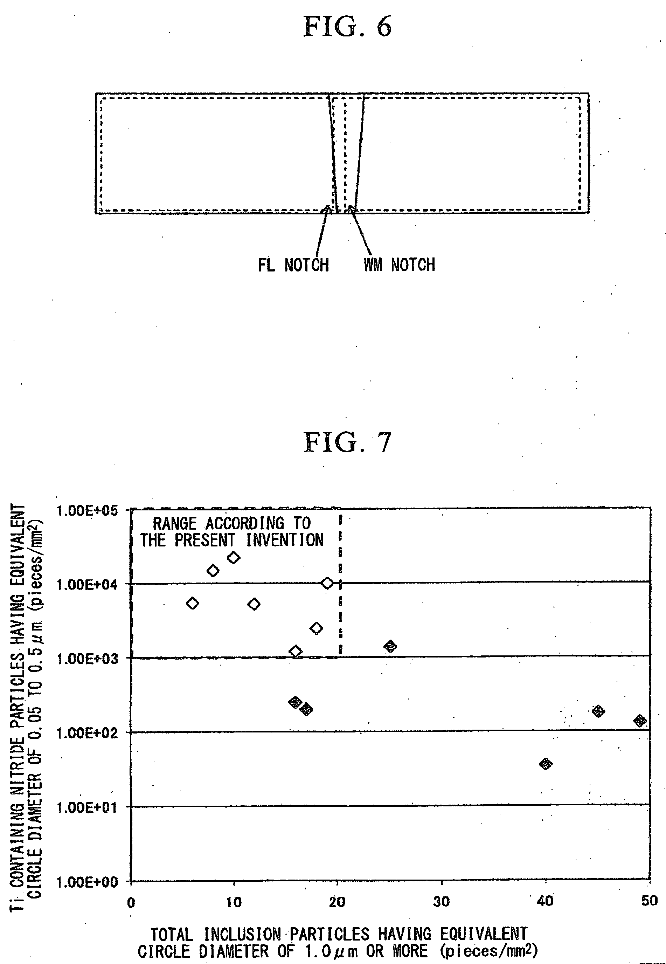

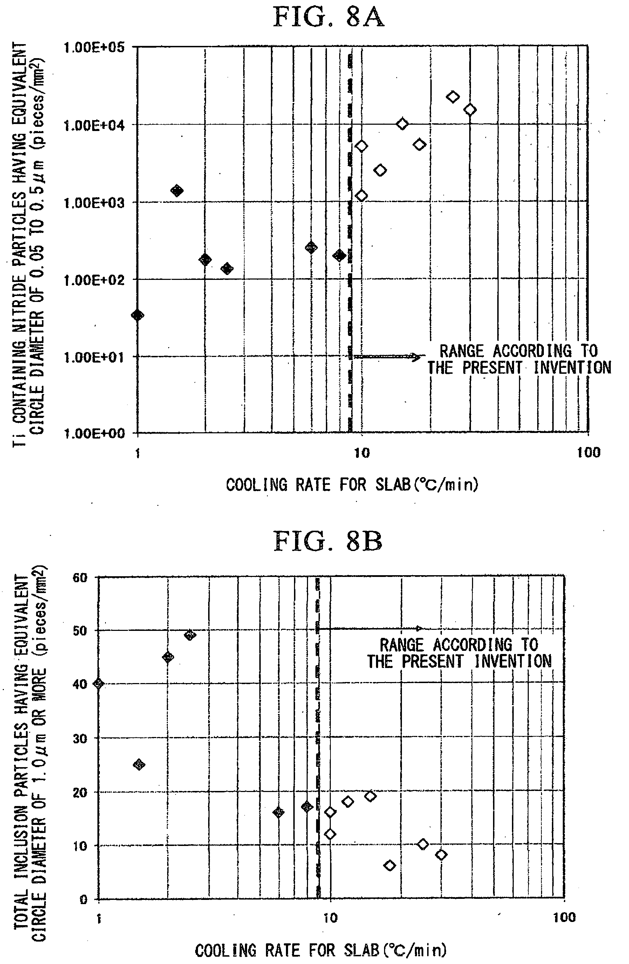

Further, electron-beam welding was applied to the steel in order to manufacture an I-groove butt-welded joint. Details of the welding will be described in Examples below. CTOD test pieces having a notch formed at a fusion line (FL) zone of the welded joint were manufactured, and CTOD tests were performed at a test temperature of 0°C. The sample was determined to be acceptable when HAZ fracture toughness value $\delta_{HAZ}$ which was obtained by the test was 0.2 mm or more, and the other samples were determined to be unacceptable. FIGs. 7, 8A, and 8B show the results of the preliminary tests. In FIGs., hollow marks represent samples determined to be acceptable in the CTOD tests, and solid marks represent samples determined to be unacceptable.

FIG 7 illustrates a relationship between the results of the CTOD tests and the numbers of the fine Ti nitrides and the coarse inclusion particles. In FIG 7, all the marks (hollow marks) of the welded joint determined to be acceptable in the CTOD tests exist within a squared range with a broken line indicated as "range according to the present invention". More specifically, samples in which CTOD value of HAZ, $\delta_{HAZ}$ was 0.2 mm or more satisfied the conditions of (1) the number of particles (the coarse inclusion particles) having the equivalent circle diameter of 1.0 $\mu$m or more was 20 pieces/mm$^2$ or less at the thickness center portion of the steel and (2) the number of Ti nitrides having the equivalent circle diameter of 0.05 $\mu$m or more and less than 0.5 $\mu$m was $1 \times 10^3$ pieces/mm$^2$ or more at the thickness center portion.

Next, a study was made of a correlation between the cooling rate for the slabs in the temperature range of 1300°C to 1100°C and the number of the fine Ti nitrides. As shown in FIG. 8A, the number of the fine Ti nitrides in the thickness center portion tends to increase with the increase in the cooling rate. In particular, the number of the inclusion particles tends apparently to increase depending on the cooling rate when the cooling rate of the slab is 9 °C/min or more. As a result, within the above-described range of the cooling rate, it was possible to control the number of the fine Ti nitrides to be in the range of $1 \times 10^3$ pieces/mm$^2$. In FIG. 8A, the cooling rate range is indicated with the broken line and the arrow as "range according to the present invention". Further, all the samples that satisfied the above-described range of the cooling rate have the CTOD value of HAZ, $\delta_{HAZ}$ of 0.2 mm or more (hollow marks).

Next, a study was made of a correlation between the cooling rate for the slabs in the temperature range of 1300°C to 1100°C and the number of the coarse inclusion particles. As shown in FIG 8B, the number of the coarse inclusion particles in the thickness center portion tends to decrease with the increase in the cooling rate. In the samples in which the cooling rate of the slab was 9 °C/min or more, the number of the coarse inclusion particles was in the range of 20 pieces/mm$^2$ or less. In FIG. 8B, the cooling rate range is indicated with the broken line and the arrow as "range according to the present invention".

On the basis of all the results of the preliminary tests, the present inventors obtained the following findings. It is possible to improve the fracture toughness of the heat-affected zone and the welded metal of the electron-beam welded joint, by (1) reducing the number of the coarse inclusion particles existing at the thickness center portion, and (2) appropriately controlling the number of the fine Ti nitrides acting as the nuclei for the intra-granular transformation. Further, it is effective to (3) control the cooling rate for the steel during casting to be in the appropriate range in order to control the size and the number of the inclusion particles. In addition, it is considered that the required cooling rate for the slabs of 9 °C/min, which is obtained through the preliminary tests, may vary depending on the conditions of equipment of ladle refining and casting in steel mill where the steel is melted and cast (for example, degree of vacuum of the vacuum degassing, and shapes of weir for casting). Thus, in order to improve the CTOD test results, it is necessary to obtain a predetermined number of the inclusion particles in predetermined composition ranges, and to limit the cooling rate during casting to 9 °C/min or more.

On the basis of the results of the preliminary tests described above, according to the present invention, the amount of C, the CeEB, the C/CeEB, and the size and the number of the inclusion particles in the steel (base metal) are controlled to be in the appropriate range, and an appropriate amounts of Al, Ti, and the like are added. Thereby, it is possible that the fine Ti nitrides are utilized as the pinning particles and the nuclei for intra-granular transformation during welding, the ratio of the fracture toughness value of the welded metal and the weld heat-affected zone relative to the fracture toughness value of the steel (base metal) is controlled to the appropriate range, and the electron-beam-welded joint in which unevenness in the fracture toughness value $\delta c$ is sufficiently suppressed and the steel which can form the above welded joint can be obtained.

The steel according to the embodiment of the present invention includes as the composition, by mass%, C: 0.02% to 0.1%, Si: 0.03% to 0.30%, Mn: 1.5% to 2.5%, Ti: 0.005 to 0.015%, N: 0.0020 to 0.0060%, and Al: more than 0.004% to 0.05%.

In addition, among unavoidable impurities included in the composition of the steel, it is necessary that P is limited to 0.015% or less, S is limited to 0.010% or less, and O is limited to 0.0035% or less.

In addition, as necessary, the steel may include Nb: 0% to 0,012%, V: 0% to 0.030%, Cr: 0% to 0.50%, Mo: 0% to 0.50%, Cu: 0% to 0.25%, Ni: 0% to 0.50%, and B: 0% to 0.0030%.

A balance of the composition of the steel consists of iron and the unavoidable impurities.

Hereinafter, the reason for adding elements and the amounts of the elements will be described. Here, the unit "%" represents mass%.

C is an element that contributes to improving the strength. In order to ensure the strength necessary for the welded structure, C of 0.02% or more is added. When the amount of C is insufficient, the hardenability of the welded metal may be insufficient and the toughness may deteriorate. The preferable lower limit is 0.03% and more preferable lower limit is 0.04%. On the other hand, when the amount of C is more than 0,06%, the hardenability excessively increases, and the toughnesses of the welded metal and the heat-affected zone deteriorate in particular. Thus, the upper limit of the amount of C is to be 0.06%.

Si is a deoxidizing element and an element that is effective in ensuring the strength of the steel plate. Thus, Si of 0.03% or more is added. However, when Si is excessively added, an excessive amount of martensite-austenite constituent is formed, and the toughnesses of the welded metal and the heat-affected zone deteriorate in particular. Thus, the upper limit of the amount of Si is to be 0.30%. The preferable upper limit is 0.25% or 0.20%, and more preferable upper limit is 0.15%.

Mn is an element that is effective in ensuring the toughness and the strength of the steel plate owing to enhancing the hardenability. When the amount of Mn is less than 1.5%, it is not possible to sufficiently obtain the toughness, strength, and hardenability of the steel. In addition, since some of Mn included in the welded metal evaporates during the electron-beam welding, the hardenability of the welded metal deteriorates. Thus, in order to ensure the toughness, strength and hardenability of the steel and to ensure the hardenability of the welded metal, Mn of 1.5% or more is added.

The preferable lower limit of the amount of Mn is 1.6% or 1.7%, and more preferable lower limit is 1.8%. On the other hand, when the amount of Mn is more than 2.5%, the hardenability excessively increases, and the toughness of the heat-affected zone deteriorate in particular. Thus, the upper limit of the amount of Mn is to be 2.5%. The preferable upper limit is 2.4%, and more preferable upper limit is 2.3%.

P is an unavoidable impurity and has an adverse effect on the toughnesses of the steel (BM), the welded metal (WM), and the heat-affected zone (HAZ). In particular, in order to ensure the toughness of the welded metal (WM) and the heat-affected zone (HAZ), it is preferable to reduce the amount of P. Thus, the amount of P is limited to 0.015% or less. The preferable amount of P is 0.010% or less or 0.006% or less. It is not necessary to limit the lower limit of the amount of P in particular, and the lower limit thereof is 0%. However, in consideration of the manufacturing cost, the excessively low amount of P of 0.001% or less is not necessary, and the amount of P may be 0.001% or more.

S is an unavoidable impurity and forms MnS. MnS precipitates from the fine Ti nitrides as nuclei, Mn-dilute region is formed, and thereby, the formation of the intra-granular ferrite (intra-granular transformation) is prompted. In order to promote the intra-granular transformation, it is preferable that the amount of S is 0.0001% or more. The preferable lower limit of the amount of S is 0.001%. As necessary, the lower limit of the amount of S may be 0.002%. Moreover, the lower limit of the amount of S may not be limited, and the lower limit may be 0%. On the other hand, when S is excessively added, the toughnesses of the welded metal (WM) and the heat-affected zone (HAZ) deteriorate in particular. Thus, the amount of S is limited to 0.010% or less. The preferable upper limit of the amount of S is 0.007% or 0.005%.

Al is an important deoxidizing element in the present invention. Al suppresses the formation of Ti oxides and precipitates the inclusion particles such as the fine Ti containing nitrides. Thus, Al of more than 0.004% is added. The preferable lower limit of the amount of Al is 0.010%. On the other hand, when the amount of Al is more than 0.05%, Al oxides, which act as the starting point of fracture, are formed, and the toughness deteriorates. Thus, the upper limit of Al is to be 0.05%. In order to enhance the toughnesses of the welded metal (WM) and the heat-affected zone (HAZ), it is preferable that the upper limit is 0.03%.

Ti is a very important element in the present invention and is utilized for deoxidation of the steel. Ti forms the fme Ti nitrides by bonding to N. The Ti nitrides may include elements except Ti and N. In the electron-beam welding joint with low heat input, grain coarsening of the austenite in the heat-affected zone (HAZ) is suppressed by the pinning effect of the fine Ti nitrides. Moreover, the fine Ti nitrides function as the nuclei for the intra-granular transformation and contribute to the improvement of the toughnesses of the welded metal (WM) and the heat-affected zone (HAZ).

In order to sufficiently obtain the above addition effects, Ti of 0.005% or more is added. It is preferable that the lower limit is 0.007%. On the other hand, when Ti is excessive, coarse Ti-containing inclusion particles are formed, and the toughness deteriorates. Thus, the upper limit is to be 0.015%. The preferable upper limit is 0.012%.

N which forms the fine Ti nitrides by bonding to Ti is a very important element in the present invention. The toughnesses of the welded metal and the heat-affected zone are enhanced by the suppression of the grain coarsening derived from the pinning effect of the Ti nitrides and by the grain refinement derived from the intro-granular transformation. Thus, the lower limit of the amount of N is to be 0.0020%. The preferable lower limit is 0.0030% or 0.0035%.

On the other hand, when the amount of N is excessive, the toughnesses of the welded metal and the heat-affected zone deteriorate. Thus, the upper limit is to be 0.0060%. The preferable upper limit is 0.0050% or 0.0040%.

O is an impurity and it is preferable to reduce the amount thereof. When the amount of O is excessive, oxides, which act as the starting point of fracture, are excessively formed, and the toughness of the steel and the heat-affected zone are adversely influenced. Thus, the upper limit is to be 0.0035%. In the case where the excessive amount of the oxides are easily formed in the steel under conditions of the composition, the manufacturing processes, and the like, the upper limit of the amount of O may be 0.0032% or less, 0.0029% or less, and 0.0025% or less. The lower limit of the amount of O may be 0%. In addition, when the amount of Al which is the deoxidizing element is insufficient, fine Ti oxides are formed in the case where a certain amount of O exists, and act as the nuclei for the intra-granular transformation in the welded metal and the heat-affected zone. Thereby, the toughness is improved. Thus, the lower limit of the amount of O may be 0.0010%.

It should be noted that, by applying the electron-beam welding according to the embodiment of the present invention under general conditions, approximately half of the amount of O in the steel may dissipate from the welded metal in some cases. For example, when the amount of O in the steel is 0.0035% or less, the amount of O in the welded metal of the welded joint after welding may be approximately 0.0018% or less in some cases. Thus, the lower limit of the amount of O in the steel is preferably 0.0015%, and is more preferably 0.0020%. The amount of O in the welded metal may be less than 20 ppm, 18 ppm or less, or 17 ppm or less. Although it is not necessary to provide the lower limit of the amount of O in the welded metal, the lower limit may be 7 ppm or more, 10 ppm or more, or 12 ppm or more.

Ca forms CaS and suppresses formation of MnS which is stretched in rolling direction. In order to improve properties in the thickness direction of the steel and particularly improve lamella tear resistance, Ca may be added. When Ca is more than 0.0050%, coarse oxides are formed and the toughnesses of the steel (base metal) and the heat-affected zone deteriorate. Thus, the upper limit is to be 0.0050%. Addition of Ca is not indispensable and the amount of C may be 0%.

Moreover, the amount of Mg in the unavoidable impurities may be limited to 0.0002% or less.

The steel according to the embodiment of the present invention may further include a predetermined amount of Nb and/or V for the following reasons.

Nb is an element that is effective in improving the hardenability and the strength of the steel (base metal). Although addition of Nb is not indispensable, Nb may be added as necessary. In order to obtain the addition effect, Nb of 0.001 % or more is added. It is preferable that Nb of 0.003% or more is added. However, when Nb is excessively added, the toughness of the welded metal (WM) and the heat-affected zone (HAZ) deteriorate. Thus, the upper limit of the amount of Nb is to be 0.012%, preferably 0.010%, and 0.004% in the case where high toughness is required in particular. It is not necessary to limit the lower limit of the amount of Nb in particular, and the amount of Nb may be 0%.

V is an element that is effective in improving the hardenability and temper softening resistance with small amount of addition. Although addition of V is not indispensable, V may be added as necessary. In order to obtain the addition effect, V of 0.005% or more is added. It is preferable that V of 0.010% or more is added. However, when V is excessively added, the toughness of the welded metal (WM) and the heat-affected zone (HAZ) deteriorate. Thus, the upper limit of the amount of V is to be 0.030%. The preferable upper limit is 0.025%, and more preferable upper limit is 0.020%. It is not necessary to limit the lower limit of the amount of V in particular, and the amount of V may be 0%.

The steel according to the embodiment of the present invention may further include at least one of Cr, Mo, Cu, Ni, and B as necessary. Although addition of the elements is not indispensable, the addition is effective in improving the hardenability and the strength. In order to obtain the effect, Cr, Mo, Cu, and/or Ni of 0.05% or more are respectively added.

B is an element that significantly improves the hardenability with small amount of addition. In the case where securement of the cooling rate and the like is difficult, B whose upper limit is 0.0030% may be added as necessary. In order to obtain the improvement effect of the hardenability, B of 0.0002% or more may be added.

In addition, since Cr, Mo, Cu and Ni are expensive, the amounts of the addition are to be Cr of 0.50% or less, Mo of 0.50% or less, Cu of 0.25% or less, and Ni of 0.50% or less, from an economic standpoint. In particular, in the steel with large amount of Mn according to the embodiment of the present invention containing, when the elements are added in surplus, the hardenability excessively.increases, which may result in deterioration in the balance of the toughness. Thus, it is preferably that the total amount of Cr, Mo, Cu and/or Ni is 0.70% or less. It is more preferably that the total amount is 0.50% or less. The total amount may be limited to 0.40%, 0.30%, or 0.20% as necessary.

In order to prevent the steel from cracking or the like due to the addition of B, the upper limit of the amount of B may be limited to 0.0020%, 0.0017% or 0.0014%. It is not necessary to limit the lower limit of Cr, Mo, Cu, Ni, and B in particular, and the amounts of the addition may be 0% respectively.

According to the steel for electron-beam welding of the embodiment of the present invention, the index value of hardenability for electron-beam welding, CeEB which is defined as a following Formula 1 is to be 0.49% to 0.60%, while satisfying the above mentioned composition.

$$CeEB = C + (9/40)Mn + (1/15)Cu + (1/15)Ni + (1/5)Cr + (1/5)Mo + (1/5)V \ ... \ (Formula \ 1)$$

where C, Mn, Cu, Ni, Cr, Mo, and V represent amounts (mass%) of each element contained in the composition of the steel. It should be noted that, in the case where any of the elements is not added to the steel, 0 is substituted into the amount of the element for utilizing the Formula 1'. For example, in the case where all of Cu, Ni, Cr, Mo, and V are not added to the steel, a following Formula 1' is utilized for CeEB instead of the above Formula 1.

$$CeEB = C + (9/40)Mn \ .....(Formula \ 1')$$

However, when Cu, Ni, Cr, Mo, and V are included as unavoidable impurities, it is preferable to calculate CeEB by using Formula 1.

The index value of hardenability for electron-beam welding, CeEB is an index which expresses the hardenability in consideration of the decrease in the amount of Mn in the welded metal at the time of electron-beam welding peculiarly. When CeEB is less than 0.49%, the hardenability of the welded metal is insufficient, upper bainite is formed, and the fracture toughness of the welded joint is insufficient.

In order to further improve the fracture toughness, it is preferable that CeEB is 0.50% or more, or 0.51% or more. However, when CeEB is more than 0.60%, the heat-affected zone (HAZ) hardens, and the fracture toughness of the welded joint is insufficient. Thus, it is preferable that the upper limit of CeEB is 0.59%, and more preferable that the upper limit of CeEB is 0.58% or more.

According to the steel of the embodiment of the present invention, the number of the inclusion particles (coarse inclusion particles) having the equivalent circle diameter of 1.0 $\mu$m or more is to be 20 pieces/mm$^2$ or less at the thickness center portion in a cross-section along the thickness direction. When the number of the coarse inclusion particles is more than 20 pieces/mm$^2$ o, the coarse inclusion particles act as the starting points of the fracture, and the fracture toughnesses of the heat-affected zone and the welded metal are insufficient.

In addition, the number of Ti nitrides having the equivalent circle diameter of 0.05 $\mu$m or more and less than 0.5 $\mu$m is to be $1 \times 10^3$ pieces/mm$^2$ or more at the above thickness center portion. As long as the Ti nitrides contain Ti of 10% or more, the Ti nitrides may include elements except Ti and N. When the number of the fine Ti nitrides is less than $1 \times 10^3$ pieces/mm$^2$, the pinning effect derived from the Ti nitrides is insufficient, and the toughnesses of the heat-affected zone and the welded metal are adversely influenced.

On the other hand, the upper limit of the number of Ti nitrides of 0.05 $\mu$m or more and less than 0.5 $\mu$m is defined since, Ti nitrides may act as the starting point of the brittle fracture when fine Ti nitrides are excessive. Thus, in order to stabilize the toughnesses of the heat-affected zone and the welded metal, the upper limit of the number of fine Ti nitrides at the thickness center portion is less than $5 \times 10^4$ pieces/mm$^2$, and preferably $4 \times 10^4$ pieces/mm$^2$ or less,

Moreover, the number of coarse inclusion particles is measured, for example, by using test pieces taken from the thickness center portion in the cross-section along the thickness direction of the steel and by using FE-SEM (Field Emission Scanning Electron Microscope).

Moreover, the number of fine Ti containing nitride particles is measured, for example, by using test pieces taken from the thickness center portion in the cross-section along the thickness direction of the steel and by using FE-TEM (Field Emission Transmission Electron Microscope). Furthermore, extracted replica films are prepared and observed by using TEM, and particles containing Ti of 10 mass% or more, which is measured by using EDX (Energy Dispersive X-ray Spectrometry), are judged as nitride particles containing Ti of 10% or more.

The ratio (C/CeEB) of the amount of C relative to the index value of hardenability for electron-beam welding, CeEB, is an index which expresses a balance between the hardenability of the welded metal and the hardenability of the heat-affected zone and the steel (base metal). Therefore C/CeEB is 0.04 to 0.18. In the electron-beam welding, since Mn evaporates, the amount of Mn in the welded metal may be less than the amount of Mn in the steel (base metal). Thus, it is preferable to ensure the hardenability by increasing the amount of C in the steel (base metal). However, when the amount of C is excessive, the high-carbon martensite is formed at the heat-affected zone (HAZ).

When C/CeEB is less than 0.04, the hardenability of the welded metal may be insufficient, and the fracture toughness may deteriorate. Thus, the lower limit is 0.04. The preferable lower limit is 0.05. On the other hand, when C/CeEB is more than 0.18, hardness at the heat-affected zone may increase, and the fracture toughness may deteriorate. Thus, the upper limit is 0.18. The preferable upper limit is 0.15, and more preferable upper limit is 0.10.

In the welded joint formed by the electron-beam welding using the steel according to the embodiment of the present invention, it is preferable that the CTOD value of the welded metal: $\delta_{WM}$, the CTOD value of the heat-affected zone: $\delta_{HAZ}$, and the CTOD value of the steel: $\delta_{BM}$ satisfy the following formula 2 and formula 3.

$$0.15 \leq \delta_{WM} / \delta_{BM} \leq 1.1 \quad \cdots \text{(Formula 2)}$$

$$0.15 \leq \delta_{HAZ} / \delta_{BM} \leq 1.1 \quad \cdots \text{(Formula 3)}$$

Herein, the $\delta_{WM}$, the $\delta_{HAZ}$, and the $\delta_{BM}$ are the minimum values of the CTOD values when three-point bending CTOD tests are carried out six times at 0°C. Although the $\delta_{BM}$ is the highest among the $\delta_{WM}$, the $\delta_{HAZ}$, and the $\delta_{BM}$, the upper limits of $\delta_{WM} / \delta_{BM}$ and $\delta_{HAZ} / \delta_{BM}$ may be 1.1 in consideration of unevenness of the measured data. Moreover, when the CTOD value is 1.0 mm or more, it is considered that ductile fracture occurs, and the calculation is conducted by regarding the CTOD value as 1.0 mm.

When $\delta_{WM} / \delta_{BM}$ and $\delta_{HAZ} / \delta_{BM}$ are less than 0.15, a balance between the $\delta_{WM}$, the $\delta_{HAZ}$, and the $\delta_{BM}$ may excessively deteriorate, and the fracture toughness of the welded portion may notably deteriorate. Thus, the lower limits of $\delta_{WM} / \delta_{BM}$ and $\delta_{HAZ} / \delta_{BM}$ may be 0.15. In the case where the electron-beam welding is applied to the steel utilizing the fine Ti nitrides according to the present invention, it is difficult to enhance the fracture toughnesses of HAZ and WM to be equivalent to that of the steel (base metal). Thus, in order to enhance the fracture toughness of the base metal in particular, the preferable upper limits of $\delta_{WM} / \delta_{BM}$ and $\delta_{HAZ} / \delta_{BM}$ are 0.40, and more preferable upper limits are 0.3.

In other words, according to the steel of the embodiment of the present invention, the deterioration of the fracture toughness of the welded metal and the heat-affected zone in the welded joint after the electron-beam welding is significantly suppressed as compared with the fracture toughness of the base metal. Thus, it is possible to obtain the welded joint in which the fracture toughness of each zone is appropriately balanced.

The electron-beam welding can be conducted under low-vacuum condition which can be achieved using simple equipment, for example, under a reduced pressure of 10 Pa or less. Although depending on the ability of the equipment, the lower limit of the degree of vacuum is preferably $10^{-2}$ Pa. The welding conditions are determined depending on the ability of the equipment and the thickness of steel within ranges in which accelerating voltage is 130 V to 180 V, beam current is 100 mA to 130 mA, and welding speed is 100 mm/min to 250 mm/min. For example, when the thickness is 80 mm, it is recommended that the accelerating voltage is approximately 175V, the beam current is approximately 120 mA, and the welding speed is approximately 125 mm/min.

Next, the method of manufacturing the steel of the present invention will be described. In the method according to the present invention, it is possible to limit the number of the coarse inclusion particles to 20 pieces/mm² or less, by cooling at a rate of 9 °C/min or more in a casting process for casting the steel such as the slab (steel piece). At the same time, it is possible to obtain the fine Ti nitrides of $1 \times 10^3$ or more. A continuous casting method is preferable as the method of manufacturing the steel (steel piece) from an industrial standpoint. Since it is possible to refine the particles such as the formed oxides and Ti containing nitrides by increasing the cooling rate after casting in the continuous casting method, the continuous casting method is preferable in order to improve the toughness.

A specific method of increasing the cooling rate for the slab to 9 °C/min or more in the continuous casting includes an increase in pressure and quantity of water at a cooling zone of in the continuous casting machine, a decrease in thickness of a casting mold, and a decrease in thickness of the slab by rolling a unsolidified layer of the slab. The upper limit of the cooling rate for the slab is 30 °C/min in general.

In the method according to the present invention, the casted steel (steel piece) having the composition is heated to 950°C to 1150°C. When the heating temperature is less than 950°C, deformation resistance during hot rolling is large, and the productivity deteriorates. On the other hand, when the steel is heated to more than 1150°C, Ti nitrides in the steel (steel piece) are coarsened, and the toughnesses of the steel (base metal) and the heat-affected zone may deteriorate.

After the steel (steel piece) is heated to 950°C to 1150°C, Thermomechanical treatment (TMCP: Thermomechanical controlled processing) is conducted in order to obtain the required strength or toughness of the steel. The thermomechanical treatment is effective in improving the strength and the toughness of the steel, and includes, for example, (1) controlled rolling (CR), (2) controlled rolling - accelerated cooling (ACC), (3) direct quenching after rolling - tempering (direct quenching and tempering: DQT), and the like. In the present invention, (2) the controlled rolling - accelerated cooling (ACC) and (3) the direct quenching after rolling - tempering are preferable in order to improve the fracture toughness.

The controlled rolling conducted in a non-recrystallization temperature range (approximately 900°C or less) is effective in refining the structure of the steel and in improving the strength and the toughness. In the present invention, it is preferable to finish the controlled rolling at a temperature equal to or higher than $Ar_3$ transformation point in order to prevent formation of deformed ferrite.

In particular, by consecutively conducting the accelerated cooling after the controlled rolling, hard phases such as bainite and martensite are formed, which leads to improvement in the strength. In order to ensure the strength and the toughness, it is preferable that the finishing temperature of the accelerated cooling is 400°C to 600°C. The direct quenching after rolling is the method such that the quenching is conducted by water cooling and the like after performing the hot rolling in a temperature range which is higher than that for the controlled rolling. In the method, since the strength excessively increases in general, the tempering is conducted in order to ensure the toughness. A tempering temperature is preferably 400°C to 650°C.

Examples

Next, Examples according to the present invention will be described. Conditions for Examples are merely examples of conditions used for checking applicability and effects of the present invention, and conditions for the present invention are not limited to these examples of conditions. Further, various conditions may be employed in the present invention within the scope of the present invention, provided that the objects of the present invention can be achieved.

(Examples 1)

Steel was manufactured using steel containing the composition shown in Table 1 and Table 2 under conditions shown in Table 3 and Table 4. Test pieces were taken from the steel, were subjected to tensile tests and CTOD tests, and were measured for the tensile strength and the fracture toughness of the steel (base metal). The strength of the base metal was measured on the basis of JIS Z 2241, by taking test pieces from a thickness 1/2 portion so that a longitudinal direction was a rolling direction.

An electron-beam welding was applied to the steel to form I-groove butt-welded joints. The electron-beam welding, which employed a RPEBW method, was conducted under conditions such that degree of vacuum was approximately 1 mbar, voltage was 175 V, current was 120 mA, and a welding rate was approximately 125 mm/minute. The weld bead width was 3.0 mm to 5.5 mm.

Further, from the welded joint, (a) six test pieces having a size of t (thickness) × 2t were taken when the thickness was less than 60 mm, whereas (b) six test pieces having a size of t (thickness) × t were taken when the thickness was 60 mm or more. A 50% fatigue crack was applied to the test pieces as a notch to a central portion of a welded metal (WM), a fusion line zone (FL), and a steel (BM). FIG. 6 shows the test piece having the notch applied thereto.

Moreover, since width of a heat-affected zone of the electron-beam welded joint was narrow, CTOD value $\delta_{HAZ}$ of the heat-affected zone was measured by using test pieces having the notch applied to the welded metal.

CTOD tests were performed at a test temperature of 0°C to obtain fracture toughness value $\delta c$. Moreover, when the CTOD value was 1.0 or more, it was considered that ductile fracture occurred, and the calculation was conducted by regarding the CTOD value as 1.0 mm. The fracture toughness values of $\delta_{WM}$, the $\delta_{HAZ}$, and $\delta_{BM}$ were the minimum values among the six test pieces at each notch. Table 3 and Table 4 show $\delta_{WM} / \delta_{BM}$ and $\delta_{HAZ} / \delta_{BM}$ based on the CTOD value $\delta_{WM}$ of the welded metal (WM), the CTOD value $\delta_{HAZ}$ of the heat-affected zone (HAZ), and the CTOD value $\delta_{BM}$ of the steel (BM) of the welded joint.

Number of inclusion particles in the steel was measured through the following method. For observation of inclusions (coarse inclusion particles) having an equivalent circle diameter of 1.0 $\mu$m or more, test pieces taken from a thickness center portion in a cross-section along a thickness direction of the steel were prepared from each of the steel, and the size and the number of the particles were measured by using FE-SEM (Field Emission Scanning Electron Microscope). For observation of Ti nitride particles (fine Ti containing nitride particles) having an equivalent circle diameter of 0.05 $\mu$m or more and less than 0.5 $\mu$m, test pieces were similarly taken from the thickness center portion, extracted replica films were prepared by using the test pieces and by electrolytic polishing which employed a SPEED method (Selective Potentiostatic Etching by Electrolyic Dissolution), and the test pieces were observed by using FE-TEM (Field Emission Transmission Electron Microscope) at a magnification of 10000-fold to 1000000-fold. Inclusion containing Ti of 10 mass% or more, which was measured by characteristic X-radiation of EDX (Energy Dispersive X-ray Spectrometry), was judged as Ti containing inclusion. The size and the number of the Ti containing inclusions were measured from the results. The observations at visual fields of 20 or more were conducted at the thickness center portion of each test piece, and average value of the number of the inclusion particles (the coarse inclusion particles and the fine Ti containing nitride particles) per unit area were calculated.

[Table 1]

TABLE 1

| STEEL No. | CHEMICAL COMPOSITION (mass%) | | | | | | | | | | | | | | | | | | CeEB (%) | C/CeEB | NOTE |
|---|---|---|---|---|---|---|---|---|---|---|---|---|---|---|---|---|---|---|---|---|---|
| | C | Si | Mn | P | S | Ti | Al | N | Ca | O | Nb | V | Cu | Ni | B | Cr | Mo | B | | | |
| 1 | 0.021 | 0.12 | 2.43 | 0.005 | 0.003 | 0.007 | 0.008 | 0.0031 | | 0.0029 | | | | | | | | | 0.57 | 0.04 | |
| 2 | 0.029 | 0.08 | 2.17 | 0.006 | 0.008 | 0.009 | 0.012 | 0.0033 | | 0.0026 | | | 0.11 | 0.34 | | | | | 0.55 | 0.05 | |
| 3 | 0.030 | 0.05 | 2.21 | 0.007 | 0.002 | 0.005 | 0.018 | 0.0036 | | 0.0028 | | | | 0.12 | | | | | 0.54 | 0.06 | |
| 4※ | 0.031 | 0.07 | 2.12 | 0.006 | 0.005 | 0.011 | 0.040 | 0.0039 | | 0.0018 | 0.019 | | | | | | | | 0.51 | 0.06 | |
| 5 | 0.036 | 0.10 | 2.26 | 0.015 | 0.003 | 0.012 | 0.009 | 0.0041 | | 0.0032 | 0.001 | | | 0.36 | | | | | 0.57 | 0.06 | |
| 6 | 0.036 | 0.15 | 2.25 | 0.005 | 0.004 | 0.009 | 0.011 | 0.0045 | | 0.0031 | | | 0.23 | | | | | | 0.56 | 0.06 | |
| 7 | 0.038 | 0.11 | 2.09 | 0.008 | 0.005 | 0.010 | 0.038 | 0.0038 | | 0.0025 | | | | 0.41 | | | | | 0.54 | 0.07 | |
| 8 | 0.039 | 0.10 | 2.22 | 0.009 | 0.003 | 0.012 | 0.014 | 0.0058 | | 0.0020 | 0.002 | 0.025 | | | | | | | 0.54 | 0.07 | |
| 9 | 0.042 | 0.09 | 2.06 | 0.005 | 0.007 | 0.011 | 0.045 | 0.0043 | | 0.0028 | | | 0.15 | 0.47 | | | | | 0.55 | 0.08 | |
| 10 | 0.040 | 0.09 | 2.17 | 0.006 | 0.005 | 0.010 | 0.024 | 0.0037 | | 0.0018 | 0.008 | | | | | | | | 0.53 | 0.08 | |
| 11 | 0.042 | 0.12 | 2.05 | 0.010 | 0.002 | 0.012 | 0.009 | 0.0034 | | 0.0024 | | | | | | | | | 0.50 | 0.08 | |
| 12 | 0.047 | 0.11 | 1.89 | 0.007 | 0.001 | 0.015 | 0.028 | 0.0035 | | 0.0021 | 0.012 | | | | | 0.50 | | | 0.57 | 0.08 | |
| 13 | 0.045 | 0.09 | 2.22 | 0.006 | 0.001 | 0.008 | 0.021 | 0.0021 | | 0.0035 | | 0.020 | | | | | | | 0.55 | 0.08 | |
| 14 | 0.048 | 0.10 | 1.96 | 0.004 | 0.002 | 0.009 | 0.008 | 0.0031 | | 0.0026 | 0.011 | | | | | | | | 0.49 | 0.10 | |
| 15 | 0.047 | 0.12 | 2.05 | 0.003 | 0.001 | 0.010 | 0.031 | 0.0034 | 0.0012 | 0.0019 | 0.009 | | | | | | | | 0.51 | 0.09 | |
| 16 | 0.048 | 0.11 | 2.19 | 0.004 | 0.002 | 0.011 | 0.012 | 0.0032 | | 0.0020 | | | | | | | | | 0.54 | 0.09 | |
| 17 | 0.049 | 0.10 | 2.18 | 0.005 | 0.001 | 0.010 | 0.037 | 0.0040 | | 0.0025 | 0.003 | | | 0.46 | | | | | 0.57 | 0.09 | |
| 18※ | 0.048 | 0.10 | 2.15 | 0.012 | 0.002 | 0.009 | 0.010 | 0.0041 | | 0.0023 | 0.002 | | 0.21 | 0.25 | | | | | 0.56 | 0.09 | |
| 19 | 0.050 | 0.13 | 1.85 | 0.007 | 0.003 | 0.011 | 0.007 | 0.0036 | | 0.0018 | | | | | | 0.50 | | | 0.57 | 0.09 | |
| 20※ | 0.049 | 0.14 | 1.81 | 0.006 | 0.004 | 0.012 | 0.009 | 0.0039 | | 0.0019 | | | | | | | 0.50 | | 0.56 | 0.09 | |
| 21 | 0.051 | 0.13 | 2.30 | 0.006 | 0.003 | 0.011 | 0.028 | 0.0035 | 0.0048 | 0.0017 | | | | | | | | | 0.57 | 0.09 | |
| 22※ | 0.055 | 0.12 | 1.81 | 0.005 | 0.010 | 0.010 | 0.021 | 0.0030 | | 0.0022 | 0.003 | 0.021 | | | | | 0.50 | | 0.57 | 0.10 | |
| 23 | 0.058 | 0.10 | 1.95 | 0.007 | 0.002 | 0.010 | 0.008 | 0.0032 | | 0.0026 | 0.006 | 0.017 | | | | | | | 0.50 | 0.12 | |
| 24 | 0.057 | 0.14 | 1.90 | 0.006 | 0.002 | 0.009 | 0.028 | 0.0043 | | 0.0013 | 0.008 | | 0.20 | 0.21 | | | | | 0.51 | 0.11 | |
| 25 | 0.059 | 0.15 | 1.84 | 0.006 | 0.003 | 0.010 | 0.021 | 0.0043 | | 0.0012 | 0.011 | | 0.12 | 0.45 | | | | | 0.51 | 0.12 | |
| 26 | 0.060 | 0.14 | 2.06 | 0.006 | 0.004 | 0.009 | 0.008 | 0.0039 | | 0.0014 | | | 0.13 | 0.20 | | 0.21 | | | 0.59 | 0.10 | |
| 27※ | 0.075 | 0.05 | 2.15 | 0.005 | 0.003 | 0.011 | 0.009 | 0.0058 | 0.0020 | 0.0022 | | | | | | | | | 0.56 | 0.13 | |
| 28※ | 0.080 | 0.11 | 1.51 | 0.006 | 0.002 | 0.010 | 0.007 | 0.0042 | | 0.0021 | | | 0.11 | 0.29 | | 0.32 | | | 0.51 | 0.16 | |
| 29※ | 0.081 | 0.08 | 1.95 | 0.007 | 0.003 | 0.011 | 0.018 | 0.0038 | 0.0031 | 0.0022 | 0.009 | | | | | | | | 0.52 | 0.16 | |
| 30※ | 0.095 | 0.05 | 2.06 | 0.006 | 0.003 | 0.010 | 0.049 | 0.0041 | | 0.0023 | | | 0.22 | 0.31 | | | | | 0.59 | 0.16 | |
| 31 | 0.052 | 0.11 | 1.85 | 0.005 | 0.002 | 0.010 | 0.006 | 0.0036 | | 0.0019 | 0.010 | | | 0.26 | 0.0014 | | | | 0.53 | 0.10 | |

NOTE column: EXAMPLE

※ not according to the scope of the invention

Blank columns indicate that no alloying element was intentionally added.

[Table 2]

TABLE 2

| STEEL No. | CHEMICAL COMPOSITION (mass%) | | | | | | | | | | | | | | | | | CeEB (%) | C/CeEB | NOTE |
|---|---|---|---|---|---|---|---|---|---|---|---|---|---|---|---|---|---|---|---|---|
| | C | Si | Mn | P | S | Ti | Al | N | Ca | O | Nb | V | Cu | Ni | Cr | B | Mo | | | |
| 32 | 0.012 | 0.13 | 2.67 | 0.007 | 0.004 | 0.013 | 0.028 | 0.0023 | | 0.0034 | | | | | | | | 0.61 | 0.02 | COMPARATIVE EXAMPLE |
| 33 | 0.111 | 0.12 | 1.92 | 0.008 | 0.004 | 0.011 | 0.021 | 0.0038 | | 0.0021 | | | | | | | | 0.54 | 0.20 | |
| 34 | 0.074 | 0.35 | 1.91 | 0.005 | 0.005 | 0.012 | 0.008 | 0.0030 | | 0.0024 | 0.011 | 0.020 | | | | | | 0.51 | 0.15 | |
| 35 | 0.021 | 0.17 | 1.46 | 0.008 | 0.002 | 0.011 | 0.028 | 0.0032 | | 0.0010 | 0.018 | 0.021 | | 0.35 | | | | 0.38 | 0.06 | |
| 36 | 0.032 | 0.10 | 2.65 | 0.006 | 0.002 | 0.008 | 0.028 | 0.0033 | | 0.0026 | | | | | | | | 0.63 | 0.05 | |
| 37 | 0.051 | 0.07 | 1.93 | 0.018 | 0.004 | 0.012 | 0.021 | 0.0038 | | 0.0019 | 0.012 | | | | | | | 0.49 | 0.11 | |
| 38 | 0.038 | 0.15 | 1.78 | 0.008 | 0.012 | 0.010 | 0.008 | 0.0031 | | 0.0025 | 0.008 | | 0.24 | 0.48 | | | | 0.49 | 0.08 | |
| 39 | 0.084 | 0.09 | 2.10 | 0.005 | 0.002 | 0.011 | 0.009 | 0.0038 | | 0.0024 | 0.023 | | | | | | | 0.56 | 0.15 | |
| 40 | 0.097 | 0.10 | 1.88 | 0.009 | 0.005 | 0.009 | 0.028 | 0.0035 | | 0.0018 | 0.010 | 0.032 | 0.10 | | | | | 0.53 | 0.18 | |
| 41 | 0.056 | 0.09 | 2.09 | 0.005 | 0.004 | 0.004 | 0.021 | 0.0036 | | 0.0025 | | | | | | | | 0.53 | 0.11 | |
| 42 | 0.075 | 0.08 | 2.05 | 0.006 | 0.003 | 0.018 | 0.008 | 0.0033 | | 0.0023 | | | | | | | | 0.54 | 0.14 | |
| 43 | 0.042 | 0.15 | 1.84 | 0.005 | 0.004 | 0.010 | 0.068 | 0.0038 | | 0.0031 | 0.020 | 0.025 | 0.13 | 0.23 | | | | 0.49 | 0.09 | |
| 44 | 0.066 | 0.14 | 1.92 | 0.009 | 0.003 | 0.012 | 0.009 | 0.0011 | | 0.0030 | 0.001 | | 0.21 | 0.45 | | | | 0.54 | 0.12 | |
| 45 | 0.081 | 0.09 | 2.11 | 0.006 | 0.002 | 0.009 | 0.028 | 0.0078 | | 0.0023 | 0.019 | 0.025 | | | | | | 0.56 | 0.14 | |
| 46 | 0.037 | 0.12 | 2.14 | 0.006 | 0.005 | 0.011 | 0.008 | 0.0038 | | 0.0054 | 0.001 | 0.030 | | | | | | 0.52 | 0.07 | |
| 47 | 0.055 | 0.10 | 1.90 | 0.005 | 0.003 | 0.011 | 0.022 | 0.0033 | | 0.0022 | | | | | | | | 0.48 | 0.11 | |
| 48 | 0.020 | 0.11 | 2.36 | 0.006 | 0.002 | 0.012 | 0.024 | 0.0036 | | 0.0031 | | | 0.17 | 0.16 | | | | 0.57 | 0.03 | |
| 49 | 0.076 | 0.09 | 2.31 | 0.004 | 0.005 | 0.014 | 0.019 | 0.0035 | | 0.0028 | | | 0.13 | 0.11 | | | | 0.61 | 0.12 | |
| 50 | 0.096 | 0.11 | 1.82 | 0.006 | 0.002 | 0.012 | 0.024 | 0.0036 | | 0.0032 | | | | | | | | 0.51 | 0.19 | |
| 51 | 0.081 | 0.09 | 2.11 | 0.006 | 0.002 | 0.009 | 0.028 | 0.0036 | 0.0053 | 0.0032 | | | | | | | | 0.56 | 0.15 | |

Underlines indicate that the values were outside the range or outside the preferable range of the present invention.

Blank columns indicate that no alloying element was intentionally added.

[Table 3]

TABLE 3

| STEEL No. | COOLING RATE FOR SLAB (°C/min) | HEATING TEMPERATURE FOR STEEL PIECE (°C) | THERMOMECHANICAL TREATMENT | PLATE THICKNESS (mm) | YIELD STRENGTH (MPa) | TENSILE STRENGTH (MPa) | A | B | AMOUNT OF O IN WELDED METAL (mass%) | [WM] MINIMUM VALUE (mm) | [HAZ] MINIMUM VALUE (mm) | [BM] MINIMUM VALUE (mm) | $\delta_{WM}/\delta_{BM}$ | $\delta_{HAZ}/\delta_{BM}$ | NOTE |
|---|---|---|---|---|---|---|---|---|---|---|---|---|---|---|---|
| | | | MANUFACTURING CONDITIONS | | | PROPERTIES OF BASE METAL | | | | | TOUGHNESS OF WELDED JOINT $\delta_c$ | | | | |
| 1 | 11 | 1050 | ACC | 50 | 374 | 489 | $6.8\times10^3$ | 9 | 0.0018 | 0.22 | 0.25 | 1.00 | 0.22 | 0.25 | EXAMPLE |
| 2 | 12 | 1050 | ACC | 60 | 399 | 487 | $7.1\times10^3$ | 8 | 0.0015 | 0.15 | 0.20 | 0.99 | 0.15 | 0.21 | |
| 3 | 9 | 1100 | ACC | 65 | 376 | 499 | $1.8\times10^4$ | 19 | 0.0009 | 0.21 | 0.30 | 1.00 | 0.21 | 0.30 | |
| 4* | 16 | 1050 | ACC | 60 | 386 | 487 | $1.3\times10^4$ | 13 | 0.0010 | 0.19 | 0.29 | 1.00 | 0.19 | 0.29 | |
| 5 | 12 | 1050 | ACC | 60 | 397 | 499 | $1.6\times10^4$ | 18 | 0.0018 | 0.16 | 0.25 | 1.00 | 0.16 | 0.25 | |
| 6 | 11 | 1050 | ACC | 80 | 378 | 487 | $6.6\times10^3$ | 18 | 0.0014 | 0.18 | 0.25 | 0.99 | 0.18 | 0.26 | |
| 7 | 13 | 1100 | ACC | 50 | 385 | 501 | $1.8\times10^4$ | 19 | 0.0014 | 0.16 | 0.25 | 1.00 | 0.16 | 0.25 | |
| 8 | 14 | 1050 | ACC | 60 | 397 | 499 | $3.9\times10^3$ | 14 | 0.0015 | 0.18 | 0.25 | 0.95 | 0.19 | 0.28 | |
| 9 | 16 | 1100 | CR | 55 | 374 | 499 | $1.4\times10^4$ | 13 | 0.0011 | 0.19 | 0.27 | 1.00 | 0.19 | 0.27 | |
| 10 | 10 | 1100 | ACC | 60 | 397 | 501 | $7.7\times10^3$ | 20 | 0.0008 | 0.20 | 0.22 | 1.00 | 0.20 | 0.22 | |
| 11 | 12 | 950 | ACC | 65 | 376 | 499 | $1.0\times10^4$ | 12 | 0.0013 | 0.16 | 0.25 | 1.00 | 0.16 | 0.25 | |
| 12 | 9 | 1050 | ACC | 65 | 383 | 487 | $1.2\times10^4$ | 18 | 0.0016 | 0.21 | 0.25 | 0.99 | 0.22 | 0.26 | |
| 13 | 14 | 1050 | CR | 90 | 397 | 487 | $2.1\times10^3$ | 16 | 0.0015 | 0.18 | 0.24 | 0.98 | 0.18 | 0.24 | |
| 14 | 11 | 1100 | ACC | 80 | 383 | 499 | $1.4\times10^4$ | 18 | 0.0014 | 0.19 | 0.25 | 1.00 | 0.19 | 0.25 | |
| 15 | 16 | 1050 | ACC | 75 | 397 | 487 | $1.4\times10^4$ | 13 | 0.0010 | 0.18 | 0.27 | 0.95 | 0.19 | 0.29 | |
| 16 | 12 | 1050 | ACC | 55 | 376 | 499 | $2.6\times10^4$ | 19 | 0.0011 | 0.16 | 0.23 | 1.00 | 0.16 | 0.23 | |
| 17 | 9 | 1000 | DQ | 100 | 397 | 487 | $8.4\times10^3$ | 13 | 0.0014 | 0.15 | 0.26 | 1.00 | 0.15 | 0.26 | |
| 18* | 10 | 1050 | ACC | 65 | 376 | 501 | $7.1\times10^4$ | 20 | 0.0013 | 0.16 | 0.17 | 1.00 | 0.16 | 0.17 | |
| 19 | 9 | 1050 | CR | 50 | 383 | 499 | $5.0\times10^4$ | 18 | 0.0010 | 0.18 | 0.27 | 0.96 | 0.19 | 0.28 | |
| 20* | 13 | 1100 | DQ | 130 | 397 | 497 | $1.2\times10^4$ | 13 | 0.0010 | 0.18 | 0.25 | 1.00 | 0.16 | 0.25 | |
| 21 | 12 | 1050 | ACC | 45 | 376 | 529 | $1.3\times10^4$ | 17 | 0.0009 | 0.19 | 0.25 | 0.95 | 0.20 | 0.26 | |
| 22* | 9 | 1050 | ACC | 70 | 383 | 501 | $9.1\times10^3$ | 14 | 0.0015 | 0.18 | 0.29 | 1.00 | 0.18 | 0.29 | |
| 23 | 15 | 1000 | ACC | 90 | 397 | 499 | $5.0\times10^4$ | 13 | 0.0014 | 0.18 | 0.22 | 1.00 | 0.18 | 0.22 | |
| 24 | 10 | 1050 | DQ | 120 | 383 | 498 | $1.2\times10^4$ | 15 | 0.0009 | 0.18 | 0.25 | 1.00 | 0.18 | 0.25 | |
| 25 | 9 | 950 | ACC | 50 | 397 | 487 | $1.3\times10^4$ | 20 | 0.0007 | 0.26 | 0.27 | 0.98 | 0.27 | 0.28 | |
| 26 | 16 | 1100 | ACC | 80 | 376 | 491 | $9.1\times10^3$ | 16 | 0.0011 | 0.17 | 0.21 | 1.00 | 0.17 | 0.21 | |
| 27* | 11 | 1150 | ACC | 100 | 376 | 487 | $2.0\times10^4$ | 18 | 0.0012 | 0.15 | 0.16 | 0.96 | 0.16 | 0.17 | |
| 28* | 12 | 1100 | ACC | 75 | 383 | 501 | $1.1\times10^4$ | 17 | 0.0009 | 0.16 | 0.19 | 1.00 | 0.16 | 0.19 | |
| 29* | 16 | 1150 | ACC | 80 | 397 | 499 | $1.2\times10^4$ | 13 | 0.0012 | 0.15 | 0.15 | 0.95 | 0.16 | 0.18 | |
| 30* | 9 | 1100 | DQ | 150 | 378 | 501 | $4.8\times10^3$ | 18 | 0.0011 | 0.16 | 0.18 | 1.00 | 0.16 | 0.18 | |
| 31 | 11 | 1050 | CR | 80 | 359 | 474 | $1.1\times10^4$ | 15 | 0.0010 | 0.15 | 0.21 | 1.00 | 0.21 | 0.21 | |

A: Ti nitride particles having equivalent circle diameter of 0.05 to 0.5 μm (pieces/mm²)
B: total particles having equivalent circle diameter of 1.0 μm or more (pieces/mm²)

* not according to the scope of the invention

Blank columns indicate that no alloying element was intentionally added.

Words written in the columns of the thermomechanical treatment indicate the following:

CR: controlled rolling (rolling at an optimal temperature for the strength and toughness),
ACC: accelerated cooling (water cooling to a temperature range of 400°C to 600°C after controlled rolling), and
DQT: quenching and tempering immediately after rolling.

When the toughness value (CTOD value) was 1.0 mm or more, it was considered that ductile fracture occurred, and the calculation was conducted by regarding the toughness value as 1.0 mm.

[Table 4]

TABLE 4

| STEEL No. | MANUFACTURING CONDITIONS | | | | PROPERTIES OF BASE METAL | | | | AMOUNT OF O IN WELDED METAL (mass%) | TOUGHNESS OF WELDED JOINT $\delta c$ | | | | | NOTE |
|---|---|---|---|---|---|---|---|---|---|---|---|---|---|---|---|
| | COOLING RATE FOR SLAB (°C/min) | HEATING TEMPERATURE FOR STEEL PIECE (°C) | THERMOMECHANICAL TREATMENT | PLATE THICKNESS (mm) | YIELD STRENGTH (MPa) | TENSILE STRENGTH (MPa) | A | B | | [WM] MINIMUM VALUE (mm) | [HAZ] MINIMUM VALUE (mm) | [BM] MINIMUM VALUE (mm) | $\delta_{WM}/\delta_{BM}$ | $\delta_{HAZ}/\delta_{BM}$ | |
| 32 | 9 | 1050 | CR | 50 | 352 | 474 | $7.7\times10^3$ | 11 | 0.0018 | 0.12 | 0.02 | 0.95 | 0.13 | 0.02 | |
| 33 | 11 | 1100 | DQ | 120 | 397 | 487 | $8.6\times10^3$ | 9 | 0.0009 | 0.04 | 0.03 | 1.00 | 0.04 | 0.03 | |
| 34 | 14 | 1150 | ACC | 60 | 397 | 499 | $2.4\times10^3$ | 14 | 0.0011 | 0.29 | 0.01 | 1.00 | 0.29 | 0.01 | |
| 35 | 16 | 1100 | ACC | 60 | 333 | 458 | $5.7\times10^4$ | 13 | 0.0006 | 0.05 | 0.21 | 1.00 | 0.05 | 0.21 | |
| 36 | 10 | 1050 | ACC | 80 | 426 | 528 | $7.1\times10^3$ | 18 | 0.0010 | 0.27 | 0.01 | 0.96 | 0.28 | 0.01 | |
| 37 | 13 | 1100 | CR | 50 | 383 | 499 | $9.4\times10^3$ | 15 | 0.0010 | 0.04 | 0.01 | 0.98 | 0.04 | 0.01 | |
| 38 | 9 | 1100 | ACC | 55 | 397 | 501 | $1.3\times10^4$ | 19 | 0.0016 | 0.06 | 0.02 | 0.96 | 0.06 | 0.02 | |
| 39 | 10 | 1150 | ACC | 80 | 387 | 503 | $7.7\times10^3$ | 14 | 0.0013 | 0.08 | 0.09 | 1.00 | 0.08 | 0.09 | |
| 40 | 12 | 1100 | ACC | 90 | 377 | 501 | $8.6\times10^3$ | 17 | 0.0011 | 0.02 | 0.03 | 1.00 | 0.02 | 0.03 | |
| 41 | 16 | 1050 | ACC | 50 | 383 | 503 | $2.4\times10^2$ | 13 | 0.0014 | 0.10 | 0.03 | 1.00 | 0.10 | 0.03 | |
| 42 | 11 | 1100 | CR | 50 | 397 | 501 | $5.7\times10^5$ | 42 | 0.0013 | 0.09 | 0.01 | 0.96 | 0.09 | 0.01 | |
| 43 | 9 | 1100 | ACC | 55 | 376 | 489 | $2.4\times10^3$ | 28 | 0.0017 | 0.01 | 0.02 | 1.00 | 0.01 | 0.02 | |
| 44 | 10 | 1100 | DQ | 70 | 383 | 501 | $8.6\times10^2$ | 16 | 0.0017 | 0.09 | 0.06 | 1.00 | 0.09 | 0.06 | |
| 45 | 12 | 1150 | ACC | 100 | 397 | 489 | $2.4\times10^3$ | 44 | 0.0013 | 0.12 | 0.03 | 1.00 | 0.12 | 0.03 | |
| 46 | 12 | 1100 | ACC | 55 | 373 | 501 | $3.6\times10^5$ | 39 | 0.0025 | 0.05 | 0.02 | 1.00 | 0.05 | 0.02 | |
| 47 | 10 | 1100 | CR | 50 | 385 | 497 | $2.4\times10^3$ | 19 | 0.0013 | 0.04 | 0.15 | 1.00 | 0.04 | 0.15 | |
| 48 | 10 | 1050 | ACC | 50 | 376 | 493 | $6.6\times10^3$ | 13 | 0.0017 | 0.03 | 0.16 | 1.00 | 0.03 | 0.16 | |
| 49 | 12 | 1050 | CR | 50 | 319 | 476 | $9.6\times10^2$ | 6 | 0.0012 | 0.16 | 0.03 | 0.95 | 0.17 | 0.03 | |
| 50 | 11 | 1100 | ACC | 90 | 379 | 502 | $1.3\times10^5$ | 48 | 0.0020 | 0.15 | 0.02 | 1.00 | 0.15 | 0.02 | |
| 51 | 10 | 1100 | ACC | 100 | 379 | 502 | $5.4\times10^3$ | 41 | 0.0026 | 0.14 | 0.01 | 1.00 | 0.14 | 0.01 | |

A: Ti NITRIDE PARTICLES HAVING EQUIVALENT CIRCLE DIAMETER OF 0.05 TO 0.5 $\mu m$ (pieces/mm²)
B: TOTAL PARTICLES HAVING EQUIVALENT CIRCLE DIAMETER OF 1.0 $\mu m$ OR MORE (pieces/mm²)

COMPARATIVE EXAMPLE

Underlines indicate that the values were that of conventional example or were outside the preferable range of the present invention.

Words written in the columns of the thermomechanical treatment indicate the following:

CR: controlled rolling (rolling at an optimal temperature for the strength and toughness),
ACC: accelerated cooling (water cooling to a temperature range of 400°C to 600°C after controlled rolling), and
DQT: quenching and tempering immediately after rolling.

When the toughness value (CTOD value) was 1.0 mm or more, it was considered that ductile fracture occurred, and the calculation was conducted by regarding the toughness value as 1.0 mm. Target value of $\delta c$ was to be 5.0 mm or more, and the value of 5.0 mm or more was judged to be acceptable.

As shown in Table 1 and Table 3, in steel No. 1-3, 5-17, 19, 21, 23-26, 31 which are the example according to the present invention, all of the composition, CeEB, and C/CeEB are within the range of the present invention, and $\delta_{HAZ}$ / $\delta_{BM}$ and $\delta_{WM}$ / $\delta_{BM}$ which are ratios of $\delta c$ of the steel (BM), the heat-affected zone (HAZ), and the welded metal (WM) exhibit sufficient values.

On the other hand, as shown in Table 2 and Table 4, in steel No. 32, since an amount of C is insufficient, an amount of Mn is excessive, CeEB is higher, and C/CeEB is lower, CTOD values of the heat-affected zone (HAZ) and the welded metal (WM) are lower, and values of $\delta_{HAZ}$ / $\delta_{BM}$ and $\delta_{WM}$ / $\delta_{BM}$ are insufficient.

In steel No. 33, since an amount of C is excessive and C/CeEB is higher, CTOD values of the heat-affected zone (HAZ) and the welded metal (WM) are lower and values of $\delta_{HAZ}$ / $\delta_{BM}$ and $\delta_{WM}$ / $\delta_{BM}$ are insufficient.

In steel No. 35, since an amount of Mn is insufficient and CeEB is lower, strength of the steel (BM) is lower, hardenability of the welded metal (WM) is insufficient, CTOD value of the welded metal (WM) decreases, and value of $\delta_{WM}$ / $\delta_{BM}$ is insufficient.

In steel No. 34, since an amount of Si is excessive, brittle phase forms excessively, CTOD value of the heat-affected zone (HAZ) is lower, and value of $\delta_{HAZ}$ / $\delta_{BM}$ is insufficient.

In steel No. 36, since an amount of Mn is excessive and C/CeEB is higher, CTOD value of the heat-affected zone (HAZ) decreases and value of $\delta_{HAZ}$ / $\delta_{BM}$ is insufficient.

In steel No. 37 and No. 38, since an amount of P and an amount of S are respectively excessive, CTOD values of the heat-affected zone (HAZ) and the welded metal (WM) are lower and values of $\delta_{HAZ}$ / $\delta_{BM}$ and $\delta_{WM}$ / $\delta_{BM}$ are insufficient.

In steel No. 39 and No. 40, since an amount of Nb and an amount of V are respectively excessive, CTOD values of the heat-affected zone (HAZ) and the welded metal (WM) are lower and values of $\delta_{HAZ}$ / $\delta_{BM}$ and $\delta_{WM}$ / $\delta_{BM}$ are insufficient.

In steel No. 41, an amount of Ti is insufficient, and in steel No. 44, an amount of N is insufficient. Thus, since Ti nitrides do not form sufficiently, CTOD values of the heat-affected zone (HAZ) and the welded metal (WM) are lower and values of $\delta_{HAZ}$ / $\delta_{BM}$ and $\delta_{WM}$ / $\delta_{BM}$ are insufficient.

In steel No. 42, an amount of Ti is excessive, and in steel No. 45, an amount of N is excessive. Thus, since Ti nitrides coarsen, CTOD values of the heat-affected zone (HAZ) and the welded metal (WM) are lower and values of $\delta_{HAZ}$ / $\delta_{BM}$ and $\delta_{WM}$ / $\delta_{BM}$ are insufficient.

In steel No. 43, an amount of Al is excessive, and in steel No. 46, an amount of O is excessive. Thus, since oxides which act as the starting point of fracture are excessive, CTOD values of the heat-affected zone (HAZ) and the welded metal (WM) are lower and values of $\delta_{HAZ}$ / $\delta_{BM}$ and $\delta_{WM}$ / $\delta_{BM}$ are insufficient.

In steel No. 47 to No. 50, the compositions are within the range of the present invention. However, in steel No. 47, CeEB is lower, and in steel No. 48, C/CeEB is lower. Thus, hardenability of the welded metal (WM) is insufficient, CTOD value decreases, and value of $\delta_{WM}$ / $\delta_{BM}$ is insufficient. In steel No. 49, CeEB is higher, and in steel No. 50, C/CeEB is higher. Thus, CTOD value of the heat-affected zone (HAZ) is lower and value of $\delta_{HAZ}$ / $\delta_{BM}$ is insufficient. In steel No. 51, since an amount of Ca is excessive and oxides which act as the starting point of fracture are excessive, CTOD value of the heat-affected zone (HAZ) is lower and value of $\delta_{HAZ}$ / $\delta_{BM}$ is insufficient.

Industrial Applicability

According to the present invention, since the deterioration in the fracture toughnesses of a welded metal and a heat-affected zone of an electron-beam welded joint of a steel with a yield strength of 355 MPa grade is suppressed as compared with the fracture toughness of a steel (base metal), it is possible to manufacture the electron-beam-welded joint in which the fracture toughness of each zone is sophisticatedly balanced. Thus, the present invention has high industrial applicability in the field of large-scale steel structure construction. In addition, since the grain diameter and number of inclusion particles are appropriately controlled, the fracture toughness is excellent. Thus, it is possible to provide the steel which is suitable for constituting a foundation portion of a tower of a wind power generator at sea at a low cost.

**Claims**

1. An electron-beam welded joint manufactured by applying an electron-beam welding to a steel plate, the steel plate consisting of, as a composition, by mass%,

   C: 0.02% to 0.06%,
   Si: 0.03% to 0.30%,
   Mn: 1.5% to 2.5%,
   Ti: 0.005 to 0.015%,
   N: 0.0020 to 0.0060%,
   Al: more than 0.004% to 0.05%,
   Nb: 0% to 0.012%,
   V: 0% to 0.030%,
   Cr: 0% to 0.50%,
   Mo: 0% to 0.50%,
   Cu: 0% to 0.25%,
   Ni: 0% to 0.50%,
   B: 0% to 0.0030%,
   Ca: 0% to 0.0050%,
   P: limited to 0.015% or less,
   S: limited to 0.010% or less,
   O: limited to 0.0035% or less,
   Mg: limited to 0.0002% or less, and
   a balance consisting of iron and unavoidable impurities, wherein
   an index value CeEB obtained by substituting the composition of the steel plate into a following Formula 1 is 0.49% to 0.60%,
   a C/CeEB, which is a ratio of an amount in mass% of C in the steel plate relative to the index value CeEB of the steel plate, is 0.04 to 0.18
   a number of inclusion particles having an equivalent circle diameter of 1.0 $\mu$m or more measured using FE-SEM is 20 pieces/mm$^2$ or less at a thickness center portion in a cross-section along a thickness direction of the steel plate, and
   a number of Ti containing nitride particles containing Ti of 10% or more and having an equivalent circle diameter of 0.05 $\mu$m or more and less than 0.5 $\mu$m is $1 \times 10^3$ pieces/mm$^2$ or more and less than $5 \times 10^4$ pieces/mm$^2$ at the thickness center portion, the number of the nitride particles containing Ti of 10% or more and having the equivalent circle diameter of 0.05 $\mu$m or more and less than 0.5 $\mu$m being measured by using FE-TEM at a magnification of 10000-fold to 1000000-fold
   the index value of hardenability for electron-beam welding,

   the index value of hardenability for electron-beam welding, $CeEB = C + (9/40)Mn + (1/15)Cu + (1/15)Ni + (1/5)Cr + (1/5)Mo + (1/5)V \cdots$ (Formula 1)

   where C, Mn, Cu, Ni, Cr, Mo, and V represent amounts in mass% of each element contained in the composition of the steel plate.

2. The electron-beam welded joint according to Claim 1, wherein the steel plate has a thickness of 45 to 150 mm.

3. The electron-beam welded joint according to Claim 1 or 2,
   wherein, when a crack tip opening displacement test CTOD value of a welded metal measured by the CTOD test at the test temperature of 0°C is defined as $\delta_{WM}$, a CTOD value of a weld heat-affected zone measured by the CTOD test at the test temperature of 0°C is defined as $\delta_{HAZ}$, and a CTOD value of the steel plate measured by the CTOD test at the test temperature of 0°C is defined as $\delta_{BM}$, the $\delta_{WM}$, the $\delta_{HAZ}$, and the $\delta_{BM}$ satisfy following formulae 2 and 3.

$$0.15 \le \delta_{WM} / \delta_{BM} \le 1.1 \quad \cdots\text{(Formula 2)}$$

$$0.15 \le \delta_{HAZ} / \delta_{BM} \le 1.1 \quad \cdots\text{(Formula 3)}$$

4. A steel plate for an electron-beam welded joint, the steel plate consisting of, as a composition, by mass%,
C: 0.02% to 0.06%,
Si: 0.03% to 0.30%,
Mn: 1.5% to 2.5%,
Ti: 0.005 to 0.015%,
N: 0.0020 to 0.0060%,
Al: more than 0.004% to 0.05%,
Nb: 0% to 0.012%,
V: 0% to 0.030%,
Cr: 0% to 0.50%,
Mo: 0% to 0.50%,
Cu: 0% to 0.25%,
Ni: 0% to 0.50%,
B: 0% to 0.0030%,
Ca: 0% to 0.0050%,
P: limited to 0.015% or less,
S: limited to 0.010% or less,
O: limited to 0.0035% or less,
Mg: limited to 0.0002% or less, and
a balance consisting of iron and unavoidable impurities, wherein
an index value CeEB obtained by substituting the composition of the steel plate into a following Formula 1 is 0.49% to 0.60%,
a C/CeEB, which is a ratio of an amount in mass% of C in the steel plate relative to the index value CeEB of the steel plate, is 0.04 to 0.18,
a number of inclusion particles having an equivalent circle diameter of 1.0 $\mu$m or more measured using FE-SEM is 20 pieces/mm$^2$ or less at a thickness center portion in a cross-section along a thickness direction of the steel plate, and a number of Ti containing nitride particles containing Ti of 10% or more and having an equivalent circle diameter of 0.05 $\mu$m or more and less than 0.5 $\mu$m is 1 x 10$^3$ pieces/mm$^2$ or more and less than 5 x 10$^4$ pieces/mm$^2$ at the thickness center portion, the number of the nitride particles containing Ti of 10% or more and having the equivalent circle diameter of 0.05 $\mu$m or more and less than 0.5 $\mu$m being measured by using FE-TEM at a magnification of 10000-fold to 1000000-fold
the index value of hardenability for electron-beam welding, CeEB = C + (9/40)Mn + (1/15)Cu + (1/15)Ni + (1/5)Cr + (1/5)Mo + (1/5)V ...(Formula 1)
where C, Mn, Cu, Ni, Cr, Mo, and V represent amounts in mass% of each element contained in the composition of the steel.

5. The steel plate for the electron-beam welded joint according to Claim 4, wherein the steel plate has a thickness of 45 to 150 mm.

6. A method of manufacturing the steel for the electron-beam welded joint according to Claim 4 or 5, the method comprising,
a casting process of casting and cooling the steel so that a cooling rate in a temperature range of 1300°C to 1100°C is 9 to 30°C/min,
a process of heating the steel to a temperature range of 950°C to 1150°C after the casting process, and thereafter,
a process of thermomechanical-treating the steel.

**Patentansprüche**

1. Eine Elektronenstrahl-Schweißverbindung, hergestellt durch Anwenden von Elektronenstrahl-Schweißen auf eine Stahlplatte, wobei die Stahlplatte, als eine Zusammensetzung in Massen-% besteht aus:

C: 0,02% bis 0,06%,
Si: 0,03% bis 0,30%,
Mn: 1,5% bis 2,5 %,
Ti: 0,005 bis 0,015%,
N: 0,0020 bis 0,0060%,
Al: mehr als 0,004% bis 0,05%,
Nb: 0% bis 0,012%,
V: 0% bis 0,030%,
Cr: 0% bis 0,50%,
Mo: 0% bis 0,50%,
Cu: 0% bis 0,25%,
Ni: 0% bis 0,50%,
B: 0% bis 0,0030%,
Ca: 0% bis 0,0050%,
P: begrenzt auf 0,015% oder weniger,
S: begrenzt auf 0,010% oder weniger,
O: begrenzt auf 0,0035% oder weniger,
Mg: begrenzt auf 0,0002% oder weniger und
einem Rest bestehend aus Eisen und unvermeidbaren Verunreinigungen, wobei
ein Indexwert CeEB, erhalten durch Einsetzen der Zusammensetzung der Stahlplatte in eine folgende Formel 1, 0,49% bis 0,60% beträgt,
ein C/CeEB, welches ein Verhältnis einer Menge an C in Massen-% in der Stahlplatte,
bezogen auf den Indexwert CeEB der Stahlplatte, ist, 0,04 bis 0,18 beträgt,
eine Anzahl an Einschlussteilchen mit einem äquivalenten Kreisdurchmesser von 1,0 $\mu$m oder mehr, gemessen unter Verwendung von FE-SEM, 20 Stück/mm$^2$ oder weniger in einem mittleren Dickebereich in einem Querschnitt entlang einer Dickerichtung der Stahlplatte beträgt und
eine Anzahl an Ti-enthaltenden Nitridteilchen, welche 10% oder mehr an Ti enthalten und einen äquivalenten Kreisdurchmesser von 0,05 $\mu$m oder mehr und weniger als 0,5 $\mu$m aufweisen, 1 x 10$^3$ Stück/mm$^2$ oder mehr und weniger als 5 x 10$^4$ Stück/mm$^2$ in dem mittleren Dickebereich beträgt, wobei die Anzahl der Ti-enthaltenden Nitridteilchen, welche 10% oder mehr an Ti enthalten und den äquivalenten Kreisdurchmesser von 0,05 $\mu$m oder mehr und weniger als 0,5 $\mu$m aufweisen, unter Verwendung von FE-TEM bei einer 10000-fachen bis 1000000-fachen Vergrößerung gemessen wird,
der Indexwert der Härtbarkeit für das Elektronenstrahl-Schweißen,

$$\text{der Indexwert der Härtbarkeit für das Elektronenstrahl-Schweißen, } CeEB = C + (9/40)Mn + (1/15)Cu + (1/15)Ni + (1/5)Cr + (1/5)Mo + (1/5)V \quad ......(\text{Formel 1})$$

wobei C, Mn, Cu, Ni, Cr, Mo und V Mengen in Massen-% jedes Elements, das in der Zusammensetzung der Stahlplatte enthalten ist, darstellen.

2. Die Elektronenstrahl-Schweißverbindung gemäß Anspruch 1, wobei die Stahlplatte eine Dicke von 45 bis 150 mm aufweist.

3. Die Elektronenstrahl-Schweißverbindung gemäß Anspruch 1 oder 2,
wobei, wenn ein Rissaufweitungstest CTOD-Wert eines geschweißten Metalls, gemessen durch den CTOD-Test bei der Testtemperatur von 0°C, als $\delta_{WM}$ definiert ist, ein CTOD-Wert einer Schweißwärmeeinflusszone, gemessen durch den CTOD-Test bei der Testtemperatur von 0°C, als $\delta_{HAZ}$ definiert ist, und ein CTOD-Wert der Stahlplatte, gemessen duch den CTOD-Test bei der Testtemperatur von 0°C, als $\delta_{BM}$ definiert ist, $\delta_{WM}$, $\delta_{HAZ}$ und $\delta_{BM}$ die folgenden Formeln 2 und 3 erfüllen.

$$0,15 \leq \delta_{WM} / \delta_{BM} \leq 1,1 \quad ....(\text{Formel 2})$$

$$0,15 \le \delta_{HAZ} / \delta_{BM} \le 1,1 \qquad ....(\text{Formel } 3)$$

4. Eine Stahlplatte für eine Elektronenstrahl-Schweißverbindung, wobei die Stahlplatte, als Zusammensetzung in Massen-% besteht aus:

C: 0,02% bis 0,06%,
Si: 0,03% bis 0,30%,
Mn: 1,5% bis 2,5%,
Ti: 0,005 bis 0,015%,
N: 0,0020 bis 0,0060%,
Al: mehr als 0,004% bis 0,05%,
Nb: 0% bis 0,012%,
V: 0% bis 0,030%,
Cr: 0% bis 0,50%,
Mo: 0% bis 0,50%,
Cu: 0% bis 0,25%,
Ni: 0% bis 0,50%,
B: 0% bis 0,0030%,
Ca: 0% bis 0,0050%,
P: begrenzt auf 0,015% oder weniger,
S: begrenzt auf 0,010% oder weniger,
O: begrenzt auf 0,0035% oder weniger,
Mg: begrenzt auf 0,0002% oder weniger und
einem Rest bestehend aus Eisen und unvermeidbaren Verunreinigungen, wobei ein Indexwert CeEB, erhalten durch Einsetzen der Zusammensetzung der Stahlplatte in eine folgende Formel 1, 0,49% bis 0,60% beträgt, ein C/CeEB, welches ein Verhältnis einer Menge an C in Massen-% in der Stahlplatte, bezogen auf den Indexwert CeEB der Stahlplatte, ist, 0,04 bis 0,18 beträgt,
eine Anzahl an Einschlussteilchen mit einem äquivalenten Kreisdurchmesser von 1,0 $\mu$m oder mehr, gemessen unter Verwendung von FE-SEM, 20 Stück/mm$^2$ oder weniger in einem mittleren Dickebereich in einem Querschnitt entlang einer Dickerichtung der Stahlplatte beträgt und
eine Anzahl an Ti-enthaltenden Nitridteilchen, welche 10% oder mehr an Ti enthalten und einen äquivalenten Kreisdurchmesser von 0,05 $\mu$m oder mehr und weniger als 0,5 $\mu$m aufweisen, 1 x 10$^3$ Stück/mm$^2$ oder mehr und weniger als 5 x 10$^4$ Stück/mm$^2$ in dem mittleren Dickebereich beträgt, wobei die Anzahl der Ti-enthaltenden Nitridteilchen, welche 10% oder mehr an Ti enthalten und den äquivalenten Kreisdurchmesser von 0,05 $\mu$m oder mehr und weniger als 0,5 $\mu$m aufweisen, unter Verwendung von FE-TEM bei einer 10000-fachen bis 1000000-fachen Vergrößerung gemessen wird,
der Indexwert der Härtbarkeit für das Elektronenstrahl-Schweißen,

der Indexwert der Härtbarkeit für das Elektronenstrahl-Schweißen, CeEB = C + (9/40)Mn + (1/15)Cu + (1/15)Ni + (1/5)Cr + (1/5)Mo + (1/5)V    ......(Formel 1)

wobei C, Mn, Cu, Ni, Cr, Mo und V Mengen in Massen-% jedes Elements, das in der Zusammensetzung des Stahls enthalten ist, darstellen.

5. Die Stahlplatte für die Elektronenstrahl-Schweißverbindung nach Anspruch 4, wobei die Stahlplatte eine Dicke von 45 bis 150 mm aufweist.

6. Ein Verfahren zur Herstellung des Stahls für die Elektronenstrahl-Schweißverbindung nach Anspruch 4 oder 5, wobei das Verfahren umfasst
ein Gussverfahren des Gießens und Abkühlens des Stahls, so dass eine Abkühlgeschwindigkeit in einem Temperaturbereich von 1300°C bis 1100° 9 bis 30°C/Min. beträgt,
ein Verfahren des Erwärmens des Stahls auf einen Temperaturbereich von 950°C bis 1150°C nach dem Gussverfahren und anschließend ein Verfahren der thermomechanischen Behandlung des Stahls.

**Revendications**

1. Joint soudé par faisceau d'électrons fabriqué en appliquant un soudage par faisceau d'électrons à une plaque en acier, la plaque en acier étant constituée, en une composition en % en poids, de
C : 0,02 % à 0,06 %,
Si : 0,03 % à 0,30 %,
Mn : 1, 5 % à 2, 5 %,
Ti : 0,005 à 0,015 %,
N : 0,0020 à 0,0060 %,
Al : plus de 0,004 % à 0,05 %,
Nb : 0 % à 0,012 %,
V : 0 % à 0,030 %,
Cr : 0 % à 0,50 %,
Mo : 0 % à 0,50 %,
Cu : 0 % à 0,25 %,
Ni : 0 % à 0,50 %,
B : 0 % à 0,0030 %,
Ca : 0 % à 0,0050 %,
P : limité à 0,015 % ou moins,
S : limité à 0,010 % ou moins,
O : limité à 0,0035 % ou moins,
Mg : limité à 0,0002 % ou moins, et
un reste constitué de fer et d'impuretés inévitables, dans lequel
une valeur indice CeEB obtenue par remplacement de la composition de la plaque d'acier par une formule 1 suivante est de 0,49 % à 0,60 %,
un C/CeEb qui est un rapport d'une quantité en % en poids de C dans la plaque d'acier par rapport à la valeur indice CeEB de la plaque d'acier, est de 0,04 à 0,18,
un nombre de particules d'inclusion ayant un diamètre circulaire équivalent de 1,0 $\mu$m ou plus mesuré en utilisant une FE-SEM est de 20 éléments/mm$^2$ ou moins sur une partie centrale de l'épaisseur dans une section transversale le long d'une direction d'épaisseur de la plaque en acier, et
un nombre de particules de nitrure contenant du Ti contenant de 10 % ou plus en Ti et ayant un diamètre circulaire équivalent de 0,05 $\mu$m ou plus et de moins de 0,5 $\mu$m est de 1 x 10$^3$ éléments/mm$^2$ ou plus et de moins de 5 x 10$^4$ éléments/mm$^2$ sur la partie centrale de l'épaisseur, le nombre de particules de nitrure contenant du Ti contenant de 10 % ou plus en Ti et ayant le diamètre circulaire équivalent de 0,05 $\mu$m ou plus et de moins de 0,5 $\mu$m étant mesuré en utilisant une FE-TEM à un grossissement de 10 000 fois à 1 000 000 fois,
la valeur d'indice de trempabilité pour le soudage par faisceau d'électrons, CeEB = C + (9/40)Mn + (1/15)Cu + (1/15)Ni + (1/5)Cr + (1/5)Mo + (1/5)V ...(formule 1)
où C, Mn, Cu, Ni, Cr, Mo et V représentent des quantités en % en poids de chaque élément contenu dans la composition de la plaque d'acier.

2. Joint soudé par faisceau d'électrons selon la revendication 1, dans lequel la plaque en acier a une épaisseur de 45 à 150 mm.

3. Joint soudé par faisceau d'électrons selon la revendication 1 ou 2,
dans lequel lorsqu'une valeur d'un test de propagation de fissure CTOD d'un métal soudé, mesurée par le test CTOD à la température de test de 0 °C est défini par $\delta_{WM}$, une valeur CTOD d'une zone de soudage affectée par la chaleur mesurée par le test CTOD à la température de test de 0 °C est définie par $\delta_{HAZ}$, et une valeur CTOD de la plaque d'acier mesurée par le test CTOD à la température de test de 0 °C est définie par $\delta_{BM}$, $\delta_{WM}$, $\delta_{HAZ}$, et $\delta_{BM}$ satisfont aux formules 2 et 3 suivantes :

$$0,15 \leq \delta_{WM}/\delta_{BM} \leq 1,1 \ \ldots(\text{formule 2})$$

$$0,15 \leq \delta_{HAZ}/\delta_{BM} \leq 1,1 \ \ldots(\text{formule 3}).$$

4. Plaque en acier pour un joint soudé par faisceau d'électrons, la plaque en acier étant constituée, en une composition en % en poids, de

C : 0,02 % à 0,06 %,

Si : 0,03 % à 0,30 %,

Mn : 1,5 % à 2,5 %,

Ti : 0,005 à 0,015 %,

N : 0, 0020 à 0,0060 %,

Al : plus de 0,004 % à 0,05 %, Nb : 0 % à 0,012 %,

V : 0 % à 0,030 %,

Cr : 0 % à 0,50 %,

Mo : 0 % à 0,50 %,

Cu : 0 % à 0,25 %,

Ni : 0 % à 0,50 %,

B : 0 % à 0,0030 %,

Ca : 0 % à 0,0050 %,

P : limité à 0,015 % ou moins,

S : limité à 0,010 % ou moins,

O : limité à 0,0035 % ou moins,

Mg : limité à 0,0002 % ou moins, et

un reste constitué de fer et d'impuretés inévitables, dans lequel

une valeur indice CeEB obtenue par remplacement de la composition de la plaque d'acier par une formule 1 suivante est de 0,49 % à 0,60 %,

un C/CeEb qui est un rapport d'une quantité en % en poids de C dans la plaque d'acier par rapport à la valeur indice CeEB de la plaque d'acier, est de 0,04 à 0,18,

un nombre de particules d'inclusion ayant un diamètre circulaire équivalent de 1,0 $\mu$m ou plus mesuré en utilisant une FE-SEM est de 20 éléments/mm$^2$ ou moins sur une partie centrale de l'épaisseur dans une section transversale le long d'une direction d'épaisseur de la plaque en acier, et

un nombre de particules de nitrure contenant du Ti contenant de 10 % ou plus en Ti et ayant un diamètre circulaire équivalent de 0,05 $\mu$m ou plus et de moins de 0,5 $\mu$m est de 1 x 10$^3$ éléments/mm$^2$ ou plus et de moins de 5 x 10$^4$ éléments/mm$^2$ sur la partie centrale de l'épaisseur, le nombre de particules de nitrure contenant du Ti contenant de 10 % ou plus en Ti et ayant le diamètre circulaire équivalent de 0,05 $\mu$m ou plus et de moins de 0,5 $\mu$m étant mesuré en utilisant une FE-TEM à un grossissement de 10 000 fois à 1 000 000 fois,

la valeur d'indice de trempabilité pour le soudage par faisceau d'électrons, CeEB = C + (9/40)Mn + (1/15)Cu + (1/15)Ni + (1/5)Cr + (1/5)Mo + (1/5)V ...(formule 1)

où C, Mn, Cu, Ni, Cr, Mo et V représentent des quantités en % en poids de chaque élément contenu dans la composition de la plaque d'acier.

5. Plaque en acier pour le joint soudé par faisceau d'électrons selon la revendication 4, dans lequel la plaque en acier a une épaisseur de 45 à 150 mm.

6. Procédé de fabrication de l'acier pour le joint soudé par faisceau d'électron selon la revendication 4 ou 5, le procédé comprenant,

un processus de coulage pour le coulage et le refroidissement de l'acier de sorte qu'une vitesse de refroidissement dans une plage de température de 1 300 °C à 1 100 °C soit de 9 à 30 °C/min,

un processus de chauffage de l'acier à une plage de température de 950 °C à 1 150 °C après le processus de coulage, et ensuite, un processus de traitement thermomécanique de l'acier.

# FIG. 1

## FIG. 2A

## FIG. 2B

## FIG. 3

HARDNESS OF WELDED METAL RELATIVE TO HARDNESS OF BASE METAL

## FIG. 4

# FIG. 5A

HIGH TOUGHNESS

FRACTURE TOUGHNESS VALUE OF WM

HIGH C/CeEB

LOW C/CeEB

LOW TOUGHNESS

CeEB

# FIG. 5B

HIGH TOUGHNESS

FRACTURE TOUGHNESS VALUE OF HAZ

LOW C/CeEB

HIGH C/CeEB

LOW TOUGHNESS

CeEB

## FIG. 6

FL NOTCH    WM NOTCH

## FIG. 7

## FIG. 8A

X-axis: COOLING RATE FOR SLAB(°C/min)

Y-axis: Ti CONTAINING NITRIDE PARTICLES HAVING EQUIVALENT CIRCLE DIAMETER OF 0.05 TO 0.5 $\mu$m (pieces/mm$^2$)

RANGE ACCORDING TO THE PRESENT INVENTION

## FIG. 8B

X-axis: COOLING RATE FOR SLAB(°C/min)

Y-axis: TOTAL INCLUSION PARTICLES HAVING EQUIVALENT CIRCLE DIAMETER OF 1.0 $\mu$m OR MORE (pieces/mm$^2$)

RANGE ACCORDING TO THE PRESENT INVENTION

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008111406 A
- JP 2007092406 A
- JP 2006322400 A
- JP 2006037397 A
- WO 9916101 A
- JP 2001021532 A
- JP 2008088504 A
- EP 2236631 A1

- JP 2004011008 A
- WO 2010052927 A1
- EP 1736562 A1
- WO 2010090349 A1
- EP 1876254 A1
- JP 2006241551 A
- JP 2005171300 A
- JP 2009091653 A